(19) Europäisches Patentamt
European Patent Office
Office européen des brevets

(11) **EP 2 282 232 B1**

(12) **EUROPÄISCHE PATENTSCHRIFT**

(45) Veröffentlichungstag und Bekanntmachung des Hinweises auf die Patenterteilung:
**04.10.2017 Patentblatt 2017/40**

(51) Int Cl.:
***G02C 13/00*** *(2006.01)*

(21) Anmeldenummer: **10014062.3**

(22) Anmeldetag: **26.01.2006**

(54) **Verwendung einer Vorrichtung zum Bestimmen von optischen Parametern eines Benutzers**

Use of a device for determining optical parameters of a user

Utilisation d'un dispositifpour déterminer des paramètres optiques d'un utilisateur

(84) Benannte Vertragsstaaten:
**DE ES FR GB IT**

(30) Priorität: **26.01.2005 DE 102005003699**

(43) Veröffentlichungstag der Anmeldung:
**09.02.2011 Patentblatt 2011/06**

(62) Dokumentnummer(n) der früheren Anmeldung(en) nach Art. 76 EPÜ:
**06706436.0 / 1 844 363**

(73) Patentinhaber: **Rodenstock GmbH**
**80687 München (DE)**

(72) Erfinder:
• **Sessner, Rainer**
**91154 Roth (DE)**
• **Schmid, Leonhard**
**82399 raisting (DE)**
• **Uttenweiler, Dietmar**
**82057 Icking (DE)**
• **Brosig, Jochen**
**85604 Zorneding (DE)**
• **Müller, Werner**
**75443 Ötisheim (DE)**

(74) Vertreter: **Müller-Boré & Partner**
**Patentanwälte PartG mbB**
**Friedenheimer Brücke 21**
**80639 München (DE)**

(56) Entgegenhaltungen:
WO-A-01/88654       US-A- 5 592 248
US-A1- 2004 189 935       US-B2- 6 692 127

**Beschreibung**

Die vorliegende Erfindung betrifft die Verwendung einer Vorrichtung zum Bestimmen von optischen Parametern eines Benutzers. Durch die Einführung von individuell optimierten Brillengläsern ist es möglich, auf die Ansprüche von Personen mit Sehfehlern einzugehen und beispielsweise Brillengläser mit individuell optimierten Sehbereichen bereitzustellen. Individuell angepaßte Brillengläser ermöglichen eine optimale Korrektur von optischen Sehfehlern eines Benutzers der Brillengläser. Eine individuelle Berechnung und Anpassung von Brillengläsern ist auch für Sportbrillen möglich, welche sich durch große Durchbiegungen, Fassungsscheiben- und Vorneigungswinkel auszeichnen. Um die optischen Vorteile von individuellen Brillengläsern, insbesondere von individuell angepaßten Gleitsichtgläsern, vollständig auszuschöpfen, ist es notwendig, diese Brillengläser in Kenntnis der Gebrauchsstellung des Benutzers zu berechnen und herzustellen und gemäß der zur Berechnung und Herstellung verwendeten Gebrauchsstellung zu tragen. Die Gebrauchsstellung ist von einer Vielzahl von Parametern abhängig, beispielsweise von der Pupillendistanz des Benutzers, dem Fassungsscheibenwinkel, der Brillenglasvorneigung, der Brillenfassung, dem Hornhautscheitelabstand des Systems von Brille und Auge und der Einschleifhöhe der Brillengläser. Diese und weitere Parameter, welche zur Beschreibung der Gebrauchsstellung herangezogen werden können, bzw. notwendig sind, sind in einschlägigen Normen, wie beispielsweise der DIN EN ISO 1366, der DIN 58 208, der DIN EN ISO 8624 und der DIN 5340 enthalten und können diesen entnommen werden. Ferner ist es notwendig, daß die Brillengläser entsprechend den optischen Parametern, welche zur Herstellung verwendet wurden, in einer Brillenfassung angeordnet bzw. zentriert werden, so daß die Brillengläser tatsächlich entsprechend den optischen Parametern in Gebrauchsstellung getragen werden.

Um die einzelnen optischen Parameter zu bestimmen, stehen dem Optiker eine Vielzahl von Meßgeräten zur Verfügung. Beispielsweise kann der Optiker mit einem sogenannten Pupillometer Pupillenreflexe auswerten bzw. den Abstand der Pupillenmitten bestimmen, um derart die Pupillendistanz zu ermitteln.

Vorneigungswinkel und Hornhautscheitelabstand können beispielsweise mit einem Meßgerät bestimmt werden, bei dem in habitueller Kopf- und Körperhaltung des Kunden das Meßgerät an eine Fassungsebene einer Brillenfassung gehalten wird. Der Vorneigungswinkel kann seitlich über einen schwerkraftgetriebenen Zeiger anhand einer Skala abgelesen werden. Zur Bestimmung des Hornhautscheitelabstands wird ein eingraviertes Lineal benutzt, mit welchem der Abstand zwischen dem geschätzten Nutengrund der Brillenfassung und der Kornea ebenfalls von der Seite gemessen wird.

Der Fassungsscheibenwinkel der Brillenfassung kann beispielsweise mit einem Meßgerät bestimmt werden, auf welches die Brille gelegt wird. Der nasale Rand einer Scheibe muß dabei über einem Drehpunkt eines beweglichen Meßarms angeordnet werden, wobei die andere Scheibe parallel zu einer eingravierten Linie verläuft. Der Meßarm wird so eingestellt, daß eine markierte Achse des Meßarms parallel zur Fassungsebene der darüber angeordneten Scheibe verläuft. Der Fassungsscheibenwinkel kann anschließend an einer Skala abgelesen werden.

US 2004/189935 A1 offenbart eine Vorrichtung zum Vermessen einer Position einer Brille relativ zu einem Kopf eines Brillenträgers, wobei an der Brillenfassung Bezugsobjekte bzw. Formstücke (ear molding, nose molding) 308, 306 angeordnet sind und mittels einer Frontalkamera und einer seitlichen Kamera die Positionen dieser Bezugsobjekte relativ zueinander und relativ zu einem Scheitel 406 eines Auges bestimmt werden. Anhand einer entsprechenden Software können dreidimensionale Daten des Kopfes mit daran angeordneter Brille erstellt werden.

US 6,692,127 B2 betrifft ein Verfahren zum Darstellen eines virtuellen Brillengestells an einem Gesicht eines Benutzers, wobei ein dreidimensionales Bild des Kopfes des Benutzers erzeugt wird und das dreidimensionale Bild mit Bilddaten von verschiedenen Brillenfassungen überlagert werden kann

Es ist eine Aufgabe der vorliegenden Erfindung, in einfacher Weise optische Parameter eines Benutzers präzise zu bestimmen.

Diese Aufgabe wird gelöst durch die Verwendung einer Vorrichtung gemäß Anspruch 1.

Bevorzugte Ausführungsformen bzw. -varianten sind Gegenstand der abhängigen Ansprüche.

Gemäß einem Aspekt der Erfindung wird eine Vorrichtung zum Bestimmen von optischen Parametern eines eine Brille in Gebrauchsstellung tragenden Benutzers verwendet, wobei die Vorrichtung aufweist:

-   zumindest zwei Bildaufnahmeeinrichtungen, welche ausgelegt und angeordnet sind, jeweils Bilddaten zumindest von Teilbereichen des Kopfes des Benutzers zu erzeugen;

-   eine Datenverarbeitungseinrichtung mit

-- einer Benutzerdatenbestimmungseinrichtung, welche ausgelegt ist, anhand der erzeugten Bilddaten Benutzerdaten zumindest eines Teilbereichs des Kopfes oder zumindest eines Teilbereichs eines Systems des Kopfes und einer daran in Gebrauchsstellung angeordneten Brille des Benutzers zu bestimmen, wobei die Benutzerdaten Ortsinformationen im dreidimensionalen Raum von vorbestimmten Punkten des Teilbereichs des Kopfes oder des Teilbereichs des Systems umfassen und

-- einer Parameterbestimmungseinrichtung, welche ausgelegt ist, anhand der Benutzerdaten zumindest einen Teil der optischen Parameter des Benutzers zu bestimmen;

- eine Datenausgabeeinrichtung, welche zur Ausgabe zumindest eines Teils der bestimmten optischen Parameter des Benutzers ausgelegt ist.

Vorteilhafterweise werden anhand der vorliegenden Vorrichtung vorzugsweise dreidimensionale Daten des Teilbereichs des Kopfes bzw. des Systems des Kopfes und der Brille erzeugt. Die dreidimensionalen Daten werden mittels der Bilddaten bestimmt. Die Bilddaten, welche mittels einer ersten Bildaufnahmeeinrichtung erzeugt werden, unterscheiden sich von den Bilddaten, welche mittels einer zweiten Bildaufnahmeeinrichtung erzeugt werden. Die Unterschiede in den Bilddaten entstehen insbesondere dadurch, daß die beiden Bildaufnahmeeinrichtungen vorzugsweise an verschiedenen Positionen angeordnet sind. Aufgrund der vorzugsweise verschiedenen Positionen der zumindest zwei Bildaufnahmeeinrichtungen werden die jeweiligen Bilddaten unter verschiedenen perspektivischen Ansichten des Kopfes bzw. des Teilbereiches des Kopfes erzeugt. Anhand der verschiedenen perspektivischen Ansichten bzw. der dadurch erzeugten verschiedenen Bilddaten des Teilbereichs des Kopfes können, unter Kenntnis der Positionen der Kameras relativ zueinander, für vorbestimmte bzw. vorbestimmbare Punkte an dem Kopf des Benutzers bzw. an dem System des Kopfes und der Brille Koordinaten im dreidimensionalen Raum bestimmt werden.

Zwei Aufnahmeeinrichtungen im Sinne der Erfindung sind beispielsweise zwei digitale Kameras, welche getrennt voneinander positioniert sind. Es ist möglich, daß eine Bildaufnahmeeinrichtung vorzugsweise eine digitale Kamera und zumindest ein optisches Umlenkelement bzw. -spiegel umfaßt, wobei die Bilddaten des Teilbereichs des Kopfes mit der Kamera mittels des Umlenkspiegels aufgezeichnet bzw. erzeugt werden. Zwei Bildaufnahmeeinrichtungen umfassen daher in gleicher Weise beispielsweise zwei insbesondere digitale Kameras und zumindest zwei Umlenkelemente bzw. -spiegel, wobei jeweils eine digitale Kamera und zumindest ein Umlenkspiegel eine Bildaufnahmeeinrichtung darstellen. Weiterhin vorzugsweise können zwei Bildaufnahmeeinrichtungen auch aus genau einer digitalen Kamera und zwei Umlenkelementen bzw. -spiegeln bestehen, wobei Bilddaten mittels der digitalen Kamera zeitversetzt aufgezeichnet bzw. erzeugt werden. Beispielsweise werden zu einem ersten Zeitpunkt Bilddaten erzeugt, wobei der Teilbereich des Kopfes mittels des einen Umlenkspiegels abgebildet wird, und zu einem zweiten Zeitpunkt Bilddaten erzeugt, welche den Teilbereich des Kopfes mittels des anderen Umlenkspiegels abbilden. Ferner kann die Kamera auch derart angeordnet sein, daß an dem ersten bzw. dem zweiten Zeitpunkt von der Kamera Bilddaten erzeugt werden, wobei kein Umlenkspiegel notwendig bzw. zwischen der Kamera und dem Kopf angeordnet ist.

Vorteilhafterweise werden mittels der erfindungsgemäßen Vorrichtung anhand von zweidimensionalen Bilddaten eine Darstellung zumindest des Teilbereichs des Kopfes oder zumindest eines Teilbereichs des Systems des Kopfes und der daran in Gebrauchsstellung angeordneten Brille des Benutzers bestimmt. Anhand dieser dreidimensionalen Darstellung können in einfacher Weise Ortsrelationen im dreidimensionalen Raum der Benutzerdaten zueinander bestimmt werden und daraus die optischen Parameter des Benutzers bestimmt werden.

Insbesondere können vorteilhafterweise eine Vielzahl zur Beschreibung der Gebrauchsstellung einer Brille bzw. der Brillengläser notwendigen optischen Parameter des Benutzers präzise und einfach bestimmt werden.

Vorzugsweise werden von den zwei Bildaufnahmeeinrichtungen weiterhin Bilddaten weitesgehend überlappender Teilbereiche, insbesondere desselben Teilbereichs des Kopfes des Benutzers erzeugt, wobei die Bildaufnahmeeinrichtungen derart ausgelegt und angeordnet sind, daß in den erzeugten Bilddaten zumindest eine Pupille des Benutzers vollständig abgebildet ist. Ferner werden lediglich die erzeugten Bilddaten zur Bestimmung der Benutzerdaten verwendet, in welchen eine Pupille des Benutzers vollständig abgebildet ist. Insbesondere wird in den Bilddaten, welche von den zwei oder mehreren Bildaufnahmeeinrichtungen erzeugt werden, ein und dieselbe Pupille des Benutzers vollständig abgebildet. Weiterhin können in den Bilddaten der beiden Bildaufnahmeeinrichtungen jeweils beide Pupillen des Benutzers abgebildet sein.

Bei der Datenverarbeitungseinrichtung handelt es sich vorzugsweise um einen Computer bzw. Mikroprozessor. Ferner können die Benutzerdatenbestimmungseinrichtung und die Parameterbestimmungseinrichtung voneinander unabhängig arbeiten. Vorzugsweise ist die Datenverarbeitungseinrichtung derart ausgelegt, daß die Benutzerdatenbestimmungseinrichtung und die Parameterbestimmungseinrichtung mittels eines Mikroprozessors betrieben werden. In anderen Worten ist die Datenverarbeitungseinrichtung derart ausgelegt, daß ein Mikroprozessor sowohl die Aufgabe(n) der Benutzerdatenbestimmungseinrichtung als auch der Parameterbestimmungseinrichtung ausführt.

Die Bildaufnahmeeinrichtungen sind derart ausgelegt und angeordnet, daß in den erzeugten Bilddaten zumindest eine Pupille des Benutzers und ein Pupillenfassungsrand und/oder ein Brillenglasrand abgebildet ist, wobei in den erzeugten Bilddaten die zumindest eine Pupille des Benutzers von dem Brillenfassungsrand und/oder dem Brillenglasrand umgrenzt ist.

In anderen Worten wird von jeder Bildaufnahmeeinrichtung eine zweidimensionale Abbildung zumindest eines Teilbereichs des Kopfes des Benutzers erzeugt. Jede der Abbildungen beinhaltet eine Pupille des Benutzers oder beide Pupillen des Benutzers. Beispielsweise können Bilddaten, welche von einer Bildaufnahmeeinrichtung erzeugt werden, lediglich eine Pupille des Benutzers beinhalten. Bilddaten, welche von einer weiteren Bildaufnahmeeinrichtung erzeugt werden, beinhalten hingegen beide Pupillen des Benutzers. In jedem Fall wird in allen zur weiteren Auswertung benutzten Bilddaten zumindest eine Pupille abgebildet und zumindest ein Brillenfassungsrand und/oder ein Brillenglasrand abgebildet, wobei es sich in allen diesen Bilddaten um dieselbe Pupille handelt. Ferner wird der der abgebildeten Pupille zugeordnete Brillenfassungsrand bzw. Brillenglasrand abgebildet. Die Bildaufnahmeeinrichtungen sind außerdem derart ausgelegt und angeordnet, daß in den zweidimensionalen Bilddaten die Abbildung der Pupille innerhalb der Abbildung des Brillenfassungs- bzw. Brillenglasrandes liegt. Besonders bevorzugt liegt die Abbildung der Pupille vollständig innerhalb der Abbildung des Brillenfassungs- bzw. Brillenglasrandes.

In einer weiteren bevorzugten Ausführungsform der vorliegenden Erfindung umfassen die Benutzerdaten Ortsinformationen für zumindest einen der folgenden Punkte:

- Schnittpunkte einer im Bezugssystem des Benutzers horizontalen Ebene mit den Brillenglasrändern und/oder den Brillenfassungsrändern der Brille, wobei die horizontale Ebene des Benutzers beide Pupillen des Benutzers schneidet und parallel zu einer vorbestimmten Nullblicklinie des Benutzers verläuft;

- Schnittpunkte einer im Bezugssystem des Benutzers vertikalen Ebene mit den Brillenglasrändern und/oder den Brillenfassungsrändern der Brille, wobei die vertikale Ebene des Benutzers senkrecht zu der horizontalen Ebene des Benutzers und parallel zu der vorbestimmten Nullblicklinie des Benutzers verläuft und eine Pupille des Benutzers schneidet;

- zumindest einen Pupillenmittelpunkt;

- Begrenzungen zumindest eines Brillenglases des Benutzers nach einer Bemaßung im Kastenmaß;

- Brillenmittelpunkt der Brillenfassung der Brille.

Unter einer Bemaßung im Kastenmaß wird im Sinne dieser Erfindung das Maßsystem verstanden, wie es in einschlägigen Normen, beispielsweise in der DIN EN ISO 8624 und/oder der DIN EN ISO 1366 DIN und/oder der DIN 58 208 und/oder der DIN 5340, beschrieben wird. Ferner wird hinsichtlich des Kastenmaßes und weiterer verwendeter herkömmlicher Begriffe und Parameter auf das Buch "Die Optik des Auges und der Sehhilfen" von Dr. Roland Enders, 1995 Optische Fachveröffentlichung GmbH, Heidelberg, sowie das Buch "Optik und Technik der Brille" von Heinz Diepes und Ralf Blendowksi, 2002 Verlag Optische Fachveröffentlichungen GmbH, Heidelberg, verwiesen.

Die Begrenzungen nach einer Bemaßung im Kastenmaß umfaßt beispielsweise Fassungspunkte für ein Auge oder beide Augen, welche am weitesten außen bzw. innen und/oder oben bzw. unten liegen. Diese Fassungspunkte werden herkömmlicherweise anhand von Tangenten an die Brillenfassung bzw. den jeweiligen Augen zugeordneten Bereichen der Brillenfassung bestimmt (vgl. DIN 58 208; Bild 3).

Die Nullblickrichtung im Sinne dieser Erfindung ist eine Blickrichtung geradeaus bei parallelen Fixierlinien. In anderen Worten handelt es sich um eine Blickrichtung, welche durch eine Stellung des Auges relativ zum Kopf des Benutzers definiert ist, wobei die Augen ein Objekt anblicken, das sich in Augenhöhe befindet und an einem unendlich fernen Punkt angeordnet ist. Folglich ist die Nullblickrichtung im Sinne dieser Erfindung lediglich durch die Stellung der Augen relativ zum Kopf des Benutzers bestimmt. Befindet sich der Kopf des Benutzers in einer normalen aufrechten Haltung, so entspricht die Nullblickrichtung im wesentlichen der Horizontalrichtung im Bezugssystem der Erde. Die Nullblickrichtung kann aber zu der Horizontalrichtung im Bezugssystem der Erde gekippt sein, falls beispielsweise der Benutzer seinen Kopf, ohne weitere Bewegung der Augen, nach vorne oder zur Seite neigt. Analog wird durch die Nullblickrichtung beider Augen eine Ebene aufgespannt, welche im Bezugssystem der Erde im wesentlichen parallel zur Horizontalebene ist. Die Ebene, welche durch die beiden Nullblickrichtungen der beiden Augen aufgespannt wird, kann ebenfalls zu der Horizontalebene im Bezugssystem der Erde geneigt sein, falls beispielsweise der Benutzer den Kopf vorne oder zur Seite neigt. Vorzugsweise entspricht die horizontale Ebene des Benutzers einer ersten Ebene und die vertikale Ebene des Benutzers einer zweiten Ebene, welche senkrecht zu der ersten Ebene ist. Beispielsweise kann die horizontale Ebene im Bezugssystem des Benutzers parallel zu einer horizontalen Ebene im Bezugssystem der Erde angeordnet sein und lediglich durch den Mittelpunkt einer Pupille verlaufen. Dies ist insbesondere dann der Fall, falls die beiden Augen des Benutzers beispielsweise in unterschiedlicher Höhe (im Bezugssystem der Erde) angeordnet sind.

Die optischen Parameter umfassen vorzugsweise einen der folgenden Werte:

- Pupillendistanz;
- monokularer Pupillenabstand;
- Hornhautscheitelabstand nach Bezugspunktforderung und/oder nach Augendrehpunktforderung;
- monokularer Zentrierpunktabstand;

- Zentrierpunktkoordinaten;
- Scheibenabstand;
- Dezentration des Zentrierpunktes;
- Scheibenhöhe und -breite;
- Scheibenmittenabstand;
- Brillenglasvorneigung;
- Fassungsscheibenwinkel;
- Einschleifhöhe.

Ferner umfassen die optischen Parameter weiterhin vorzugsweise einen Augendrehpunkt eines Auges und/oder Parameter, anhand welcher ein dynamisches Sehverhalten eines Benutzers bestimmt werden kann, wie beispielsweise Konvergenz einer Augenstellung und/oder Blickauslenkung.

Die Pupillendistanz entspricht im wesentlichen dem Abstand der Pupillenmitten.

Die optischen Parameter umfassen besonders bevorzugt physiologische und anatomische Parameter eines Brillenträgers, fassungsspezifische Eigenschaften sowie Merkmale eines Systems Brille-Auge des Benutzers, welches beispielsweise in der DIN 58208 beschrieben ist. Die Merkmale des Systems Brille-Auge des Benutzers können beispielsweise zur Berechnung von Brillengläsern und zur genauen Zentrierung von Brillengläsern verwendet werden, Zentrierdaten gemäß der zitierten Normen exakt bzgl. einer Scheiben- bzw. einer Fassungsebene bestimmt werden. Die Scheibenebene ist hierbei die Ebene durch eine horizontale und vertikale (im Bezugssystem der Erde) Mittellinie im rechten bzw. linken Kastensystem in der Brillenfassung. Die Fassungsebene ist die Ebene durch zueinander vertikale Mittellinien der die rechte und linke Scheibenebene der Brillenfassung festlegenden Kastensysteme.

Weiterhin vorzugsweise sind in Betriebsstellung die Bildaufnahmeeinrichtungen innerhalb eines Raumbereichs angeordnet, welcher von einem Kegel mit einem vorbestimmten Öffnungswinkel umfangen ist, wobei die Kegelspitze des Kegels in einer Umgebung eines vorbestimmten Bezugspunktes angeordnet ist und die Kegelachse parallel zu einer vorbestimmten Richtung angeordnet ist, wobei betriebsmäßig die Nullblickrichtung des Benutzers der vorbestimmten Richtung entspricht.

In anderen Worten sind die Bildaufnahmeeinrichtungen vorzugsweise in einem Kegelvolumen angeordnet. Die Spitze des Kegels befindet sich in einem Abstand von weniger als etwa 20 cm, vorzugsweise weniger als etwa 10 cm bevorzugt etwa 0 cm von dem Bezugspunkt entfernt.

Vorzugsweise entspricht betriebsmäßig der Ort einer der Pupillen des Benutzers oder der Ort der Nasenwurzel des Benutzers näherungsweise dem vorbestimmten Bezugspunkt. Bei Betrieb der Vorrichtung kann der Benutzer derart positioniert werden, daß sich der Ort einer der Pupillen oder der Nasenwurzel des Benutzers näherungsweise an dem vorbestimmten Bezugspunkt, d.h. im wesentlichen der Kegelspitze, befindet. Die Distanz zwischen der Kegelspitze des Kegels und einer der Pupillen bzw. der Nasenwurzel des Benutzers beträgt bevorzugt weniger als etwa 20 cm, weiterhin bevorzugt weniger als etwa 10 cm , besonders bevorzugt etwa 0 cm.

Gemäß einer weiteren bevorzugten Ausführungsform der vorliegenden Erfindung beträgt der Öffnungswinkel des Kegels weniger als 90°, weiterhin bevorzugt zwischen etwa 60° und etwa 10°, besonders bevorzugt zwischen etwa 45° und etwa 20°, insbesondere etwa 30°. Der Öffnungswinkel entspricht hierbei dem Winkel zwischen der Symmetrieachse des Kegels und der Mantelfläche des Kegels, wobei der Kegel rotationssymmetrisch ist. In anderen Worten kann das Kegelvolumen durch Rotation eines rechtwinkligen Dreiecks beschrieben werden, wobei das Dreieck um eine Kathete rotiert und die Mantelfläche des Kegels anhand der Rotation der Hypothenuse des rechtwinkligen Dreiecks beschrieben wird. Der Öffnungswinkel des Kegels entspricht dem Winkel zwischen der Hypothenuse und der Rotationsachse, d.h. der genannten Kathete des rechtwinkligen Dreiecks.

Durch die Anordnung des Bildaufnahmeeinrichtungen auf einem Kegel mit einem Öffnungswinkel von vorzugsweise etwa 30° können vorteilhafterweise Benutzerdaten sehr effektiv bestimmt werden, da Bilddaten erzeugt werden können, ohne daß die Pupille des Benutzers beispielsweise von der Brillenfassung oder einer Nase des Benutzers verdeckt ist..

Weiterhin vorzugsweise schneiden sich effektive optische Achsen der Bildaufnahmeeinrichtungen zumindest beinahe, wobei ein Schnittwinkel zwischen etwa 60° und etwa 10°, vorzugsweise zwischen etwa 45° und etwa 20°, besonders bevorzugt etwa 30° beträgt.

Effektive optische Achsen der Bildaufnahmeeinrichtungen im Sinne dieser Erfindung sind diejenigen Bereiche von Linien, welche von dem Mittelpunkt der jeweiligen Aperturen der Bildaufnahmeeinrichtungen senkrecht zu diesen Aperturen ausgehen und den abgebildeten Teilbereich des Kopfes des Benutzers schneiden. In anderen Worten handelt es sich bei den effektiven optischen Achsen insbesondere um die optischen Achsen der Bildaufnahmeeinrichtungen, wobei diese optischen Achsen herkömmlicherweise senkrecht zu einem Linsensystem der Bildaufnahmeeinrichtungen angeordnet sind und vom Zentrum des Linsensystems ausgehen. Befinden sich im Strahlengang der Bildaufnahmeeinrichtungen keine weiteren optischen Elemente, wie beispielsweise Umlenkspiegel oder Prismen, so entspricht die effektive optische Achse im wesentlichen der optischen Achse der Bildaufnahmeeinrichtung. Sind jedoch im Strahlengang der Bildaufnahmeeinrichtung weitere optische Elemente, beispielsweise ein oder mehrere Umlenkspiegel, angeordnet, entspricht die effektive optische Achse nicht mehr der optischen Achse der Bildaufnahmeeinrichtung, wie sie von der Bildaufnahmeeinrichtung ausgeht.

Anders ausgedrückt ist die effektive optische Achse im Sinne dieser Erfindung derjenige Bereich einer gegebenenfalls mehrfach optisch umgelenkten optischen Achse einer Bildaufnahmeeinrichtung, welcher ohne Änderung der Richtung den Kopf des Benutzers schneidet. Die optische Achse der Bildaufnahmeeinrichtung entspricht einer Linie, welche von einem Mittelpunkt einer Apertur der Bildaufnahmeeinrichtung unter einem rechten Winkel zu einer Ebene, welche die Apertur der Bildaufnahmeeinrichtung umfaßt, ausgeht, wobei die Richtung der optischen Achse der Bildaufnahmeeinrichtung durch optische Elemente, wie beispielsweise Spiegel und/oder Prismen, veränderbar ist.

Beinahe schneiden im Sinne dieser Erfindung bedeutet, daß die effektiven optischen Achsen einen kleinsten Abstand von weniger als etwa 10 cm, bevorzugt weniger als etwa 5 cm, besonders bevorzugt weniger als etwa 1 cm aufweisen. Zumindest beinahe schneiden bedeutet daher, daß sich die effektiven Achsen schneiden oder sich beinahe schneiden.

In einer weiteren bevorzugten Ausführungsform ist betriebsmäßig die Nullblickrichtung des Benutzers im wesentlichen parallel zu der effektiven optischen Achse zumindest einer der Bildaufnahmeeinrichtungen angeordnet. In anderen Worten ist im Betriebszustand zumindest eine der Bildaufnahmeeinrichtungen derart angeordnet bzw. positioniert, daß die Nullblickrichtung des Benutzers im wesentlichen parallel zu der effektiven optischen Achse dieser Bildaufnahmeeinrichtungen angeordnet werden kann, bzw. sich der Benutzer so positionieren kann, daß dessen Nullblickrichtung im wesentlichen parallel zu der effektiven optischen Achse dieser Bildaufnahmeeinrichtungen angeordnet ist.

In einer weiteren bevorzugten Ausführungsform der vorliegenden Erfindung ist die effektive optische Achse zumindest einer der Bildaufnahmeeinrichtungen im wesentlichen parallel zu einer Horizontalrichtung im Bezugssystem der Erde angeordnet.

Weiterhin vorzugsweise ist betriebsmäßig die Horizontalebene des Benutzers derart angeordnet, daß die effektive optische Achse zumindest einer der Bildaufnahmeeinrichtungen darin liegt. Das heißt, im Betriebszustand der Vorrichtung der vorliegenden Erfindung ist zumindest eine der Bildaufnahmeeinrichtungen vorzugsweise derart angeordnet, daß sich der Benutzer so positionieren kann bzw. der Benutzer so positioniert werden kann, daß die Horizontalebene des Benutzers die effektive optische Achse umfaßt. Im Betriebszustand kann der Benutzer folglich seinen Kopf derart ausrichten, daß die Horizontalebene die effektive optische Achse der Bildaufnahmeeinrichtung vorzugsweise umfaßt. Bei der Horizontalebene kann es sich vorzugsweise auch um die Horizontalebene im Bezugssystem der Erde handeln.

In einer besonders bevorzugten Ausführungsform ist in Betriebsstellung eine der Bildaufnahmeeinrichtungen derart angeordnet, daß ihre effektive optische Achse die Nasenwurzel des Benutzers zumindest beinahe schneidet. In anderen Worten kann im Betriebszustand der Vorrichtung der vorliegenden Erfindung der Benutzer vorzugsweise derart positioniert werden bzw. sich vorzugsweise derart positionieren, daß die effektive optische Achse zumindest einer der Bildaufnahmeeinrichtungen die Nasenwurzel des Benutzers beinahe schneidet. Beinahe schneidet bedeutet hierbei, daß der minimale Abstand zwischen der effektiven optischen Achse und der Nasenwurzel des Benutzers weniger als etwa 10 cm, vorzugsweise weniger als etwa 5 cm, besonders bevorzugt weniger als etwa 1 cm beträgt.

In einer weiteren bevorzugten Ausführungsform ist in Betriebsstellung zumindest eine der Bildaufnahmeeinrichtungen derart angeordnet, daß ihre effektive optische Achse im wesentlichen symmetrisch bezüglich der Pupillen des Benutzers angeordnet ist. Symmetrisch bezüglich der Pupillen angeordnet, bedeutet im Sinne dieser Erfindung, daß jeder Punkt auf der effektiven optischen Achse den gleichen Abstand zu den beiden Pupillen des Benutzers aufweist. In anderen Worten liegt die effektive optische Achse in einer Ebene, welche senkrecht zu einer Verbindungsstrecke der Mittelpunkte der beiden Pupillen angeordnet ist und diese Verbindungsstrecke halbiert.

Bevorzugt schneiden sich die effektiven optischen Achsen den zumindest zwei Bildaufnahmeeinrichtungen beinahe. Insbesondere sind die effektiven optischen Achsen der zumindest zwei Bildaufnahmeeinrichtungen derart angeordnet, daß ein Ort minimalen Abstandes der beiden effektiven optischen Achsen von beiden Pupillen des Benutzers gleich weit entfernt ist. Insbesondere entspricht ein Ort minimalen Abstandes der effektiven optischen Achsen dem Ort der Nasenwurzel des Benutzers. In anderen Worten schneiden sich die effektiven optischen Achsen zumindest beinahe, wobei der Schnittpunkt der effektiven optischen Achsen bzw. der Punkt mit minimalen Abstand von den effektiven optischen Achsen symmetrisch bezüglich der Pupillen des Benutzers angeordnet ist, vorzugsweise dem Ort der Nasenwurzel des Benutzers entspricht.

Weiterhin vorzugsweise schneiden sich Projektionen der effektiven optischen Achsen der zumindest zwei Bildaufnahmeeinrichtungen auf einer Horizontalebene im Bezugssystem der Erde unter einem Schnittwinkel, welche zwischen etwa 10° und etwa 60°, vorzugsweise zwischen etwa 15° und etwa 40°, besonders bevorzugt etwa 23,5° beträgt, wodurch eine vereinfachte Selektion der Benutzerdaten erreicht wird.

Vorteilhafterweise ist es anhand der bevorzugten Vorrichtung der vorliegenden Erfindung möglich, Benutzerdaten des Benutzers auch bei Brillenfassungen mit sehr breiten Bügeln oder bei Sportbrillenfassungen, welche das Auge seitlich im wesentlichen verdecken, zu bestimmen.

In einer weiteren bevorzugten Ausführungsform der vorliegenden Erfindung schneiden sich Projektionen der effektiven optischen Achse der zumindest zwei Bildaufnahmeeinrichtungen auf eine Vertikalebene im Bezugssystem der Erde unter einem Schnittwinkel, welcher zwischen etwa 10° und etwa 60°, vorzugsweise zwischen etwa 15° und etwa 40°, besonders bevorzugt etwa 23,5° beträgt.

In einer besonders bevorzugten Ausführungsform der vorliegenden Erfindung ist in Betriebsstellung die Nullblickrichtung des Benutzers parallel zu der Horizontalebene im Bezugssystem der Erde angeordnet.

Weiterhin vorzugsweise umfaßt die Benutzerdatenbestimmungseinrichtung eine Benutzerdatenpositionierungseinrichtung, welche ausgelegt ist, vorbestimmten Benutzerdaten Positionen im zweidimensionalen Raum der Bilddaten zuzuordnen. In anderen Worten werden Benutzerdaten, d.h. Ortsinformationen im dreidimensionalen Raum, auf Ortsinformationen im zweidimensionalen Raum abgebildet. Beispielsweise wird der Pupillenmittelpunkt in den erzeugten zweidimensionalen Bilddaten abgebildet.

In einer weiteren bevorzugten Ausführungsform der vorliegenden Erfindung ist die Benutzerdatenpositionierungseinrichtung derart ausgelegt, daß die Positionen in den Bilddaten, welche zumindest einem Teil der vorbestimmten Benutzerdaten zugeordnet werden, von einer Person zuordenbar sind. Beispielsweise können Begrenzungen zumindest eines Brillenglases des Benutzers nach einer Bemaßung im Kastenmaß von einer Person zugeordnet werden.

In einer weiteren besonders bevorzugten Ausführungsform ist die Benutzerdatenpositionierungseinrichtung ausgelegt, Positionen der Bilddaten, welche den vorbestimmten Benutzerdaten zugeordnet werden, unter Berücksichtigung von Ortsinformationen zumindest einer der Bildaufnahmeeinrichtungen im dreidimensionalen Raum vorzubestimmen. Gemäß einer bevorzugten Ausführungsform kann die Zuordnung der Positionen in den Bilddaten von einer Person durchgeführt werden. Die Zuordnung der Positionen ist jedoch vorzugsweise nicht für alle vorhandenen Positionen möglich, sondern lediglich für eine vorbestimmte Auswahl von Positionen. Beispielsweise kann der Schnittpunkt einer im Bezugssystem des Benutzers horizontalen Ebene mit den Brillenglasrändern vorzugsweise nicht vollständig entlang der Brillenglasränder zugeordnet werden, sondern lediglich entlang einer oder mehrere Geraden in den Bilddaten.

In einer weiteren bevorzugten Ausführungsform ist die Benutzerdatenpositionierungseinrichtung ausgelegt, zumindest einen Teil der Benutzerdaten Positionen im zweidimensionalen Raum der Bilddaten automatisch zuzuordnen. Beispielsweise können im zweidimensionalen Raum der Bilddaten die Positionen der Pupillenmittelpunkte automatisch zugeordnet bzw. bestimmt werden.

Bevorzugt sind die zumindest zwei Bildaufnahmeeinrichtungen ausgelegt, Bilddaten zeitgleich zu erzeugen, wobei besonders bevorzugt die Bildaufnahmeeinrichtungen zeitgleich jeweils Bilddaten von beiden Augen des Benutzers erzeugern.

Weiterhin vorzugsweise sind die Bildaufnahmeeinrichtungen ausgelegt, Bilddaten des Benutzers sequentiell für eine Vielzahl von unterschiedlichen Blickrichtungen des Benutzers zu erzeugen. Hierbei können beispielsweise Bilddaten bei verschiedenen diskreten Blickrichtungen, d.h. diskreten Auslenkungen der Augen erzeugt werden. Es aber auch möglich, daß Bilddaten bei verschiedenen diskreten Kopfausrichtungen erzeugt werden.

Insbesondere kann mittels der Datenverarbeitungsvorrichtung anhand der Vielzahl der Bilddaten ein Sehverhalten des Benutzers bestimmt werden. Besonders bevorzugt können mittels der Bildaufnahmeeinrichtungen die Bilddaten in einer sehr schnellen zeitlichen Folge erzeugt werden, so daß die Datenverarbeitungsvorrichtung ein im wesentliches kontinuierliches Sehverhalten des Benutzers bestimmen kann.

Eine weitere beispielhafte Vorrichtung nicht gemäß der beanspruchten Erfindung zum Bestimmen von optischen Parametern eines Benutzers umfaßt

- zumindest eine Bildaufnahmeeinrichtungen, welche ausgelegt und angeordnet ist, Bilddaten zumindest von Teilbereichen des Kopfes des Benutzers zu erzeugen;

- zumindest eine Musterprojektionseinrichtung, welche ausgelegt und angeordnet ist vorbestimmte Musterdaten auf zumindest Teilbereiche des Kopfes des Benutzers zu projizieren;

- eine Datenverarbeitungseinrichtung mit

-- einer Benutzerdatenbestimmungseinrichtung, welche ausgelegt ist, anhand der erzeugten Bilddaten unter Berücksichtigung der projizierten Musterdaten Benutzerdaten zumindest eines Teilbereichs des Kopfes oder zumindest eines Teilbereichs eines Systems des Kopfes und einer daran in Gebrauchsstellung angeordneten Brille des Benutzers zu bestimmen, wobei die Benutzerdaten Ortsinformationen im dreidimensionalen Raum von vorbestimmten Punkten des Teilbereichs des Kopfes oder des Teilbereichs des Systems umfassen und

-- einer Parameterbestimmungseinrichtung, welche ausgelegt ist, anhand der Benutzerdaten zumindest einen Teil der optischen Parameter des Benutzers zu bestimmen;

- eine Datenausgabeeinrichtung, welche zur Ausgabe zumindest eines Teils der bestimmten optischen Parameter des Benutzers ausgelegt ist.

Vorzugsweise umfaßt die Vorrichtung genau eine Bildaufnahmeeinrichtung und genau eine Musterprojektionseinrichtung, wobei auch gemäß dieses Aspekts der Erfindung, analog zu dem vorangehenden Aspekt der Erfindung, vorteilhafterweise dreidimensionale Benutzerdaten des Teilbereichs des Kopfes oder des Teilbereichs des Systems erzeugt werden. Die dreidimensionalen Benutzerdaten können vorteilhafterweise anhand von Bilddaten lediglich einer Bildaufnahmeeinrichtung erzeugt werden. Vorzugsweise werden die dreidimensionalen Daten mittels des Prinzips phasenmessender Triangulation erzeugt. Hierbei werden dem Kopf bzw. dem Teilbereich des Kopfes Musterdaten überlagert bzw. mittels der Musterprojektionseinrichtung darauf projiziert. Die Bildaufnahmeeinrichtung erzeugt Bilddaten des zumindest Teilbereichs des Kopfes im zweidimensionalen Raum. Eine Oberflächenstruktur des Teilbereichs des Kopfes, d.h. die Koordinaten in der dritten Dimension, wird durch Phaseninformation der projizierten Musterdaten indirekt über Intensitätsmuster erzeugt.

Folglich können gemäß dieses Aspekts der vorliegenden Erfindung dreidimensionale Benutzerdaten erzeugt werden. Anhand der dreidimensionalen Benutzerdaten könne die optischen Parameter des Benutzers, analog zu dem vorangehenden Aspekt der Erfindung, bestimmt werden, wobei lediglich eine Bildaufnahmeeinrichtung verwendet wird.

Die Musterprojektionseinrichtung ist beispielsweise ein herkömmlicher Projektor wie beispielsweise ein handelsüblicher Beamer. Die projizierten Musterdaten sind beispielsweise ein Streifenmuster bzw. ein binäres Sinusmuster. Die Musterdaten werden auf zumindest einen Teilbereich des Kopfes des Benutzers projiziert und mittels der Bildaufnahmeeinrichtung werden Bilddaten davon erzeugt. Von dem so beleuchteten Teilbereich des Kopfes des Benutzers werden unter einem Triangulationswinkel von der Bildaufnahmeeinrichtung Bilddaten erzeugt. Der Triangulationswinkel entspricht dem Winkel zwischen einer effektiven optischen Achse der Bildaufnahmeeinrichtung und einem Projektionswinkel der Musterprojektionseinrichtung. Höhendifferenzen des Teilbereichs des Kopfes entsprechen lateralen Verschiebungen beispielsweise der Streifen des Streifenmusters als bevorzugte Musterdaten. Vorzugsweise wird bei der phasenmessenden Triangualtion das sogenannte Phasen-Schiebe-Verfahren verwendet, wobei auf Teilbereich des Kopfes ein periodisches, in der Intensitätsverteilung näherungsweise sinusförmiges Wellenmuster projiziert wird und das Wellenmuster schrittweise in dem Projektor bewegt. Während der Bewegung des Wellenmusters werden von der Intensitätsverteilung (und dem Teilbereich des Kopfes) während einer Periode vorzugsweise zumindest dreimal Bilddaten erzeugt. Aus den erzeugten Bilddaten kann auf die Intensitätsverteilung rück geschlossen werden und eine Phasenlage der Bildpunkte zueinander bestimmt werden, wobei Punkte auf der Oberfläche des Teilbereichs des Kopfes entsprechend ihrer Entfernung von der Bildaufnahmeeinrichtung einer bestimmten Phasenlage zugeordnet sind. Weiterhin wird auf die Zulassungsarbeit mit dem Titel "Phasenmessende Deflektometrie (PDM) - ein hochgenaues Verfahren zur Vermessung von Oberflächen" von Rainer Seßner, März 2000, verwiesen, welche für weitere Begriffsdefinitionen insoweit einen integralen Offenbarungsbestandteil der vorliegenden Anmeldung dar stellt.

Ein Verfahren zum Bestimmen von optischen Parametern eines Benutzers umfasst folgende Schritte:

- Erzeugen von Bilddaten zumindest von Teilbereichen des Kopfes des Benutzers aus zumindest zwei unterschiedlichen Aufnahmerichtungen;

- Bestimmen von Benutzerdaten zumindest eines Teilbereichs des Kopfes oder zumindest eines Teilbereichs eines Systems des Kopfes und einer daran in Gebrauchsstellung angeordneten Brille des Benutzers anhand der erzeugten Bilddaten, wobei die Benutzerdaten Ortsinformationen im dreidimensionalen Raum von vorbestimmten Punkten des Teilbereichs des Kopfes oder des Teilbereichs des Systems umfassen;

- Bestimmen zumindest eines Teils der optischen Parameter des Benutzers anhand der Benutzerdaten und

- Ausgabe zumindest eines Teils der bestimmten optischen Parameter des Benutzers.

Unter zwei unterschiedlichen Aufnahmerichtungen wird im Sinne der vorliegenden Erfindung verstanden, daß von überlappenden Teilbereichen des Kopfes, vorzugsweise von ein und demselben Teilbereich des Kopfes, verschiedene Bilddaten erzeugt werden, insbesondere, daß Bilddaten von identischen Teilbereichen des Kopfes des Benutzers unter verschiedenen perspektivischen Ansichten erzeugt werden. Folglich wird zwar derselbe Teilbereich des Kopfes abgebildet, die Bilddaten unterscheiden sich jedoch. Unterschiedliche Aufnahmerichtungen können beispielsweise auch dadurch erreicht werden, daß die Bilddaten von zumindest zwei Bildaufnahmeeinrichtungen erzeugt werden, wobei effektive optische Achsen der zumindest zwei Bildaufnahmeeinrichtungen nicht parallel sind.

Weiterhin ist in den erzeugten Bilddaten zumindest eine Pupille des Benutzers und ein Brillenfassungsrand und/oder ein Brillenglasrand abgebildet, wobei in den erzeugten Bilddaten, die zumindest eine Pupille des Benutzers von dem Brillenfassungsrand und/oder dem Brillenglasrand umgrenzt ist.

Die Erfindung wird nachfolgend anhand begleitender Zeichnungen bevorzugter Ausführungsformen beispielhaft beschrieben. Es zeigt:

Figur 1: eine perspektivische Schemaansicht einer bevorzugten Ausführungsform der Vorrichtung gemäß der vorliegenden Erfindung in Betriebsstellung;

Figur 2: eine schematische Schnittansicht in Draufsicht einer Anordnung der Bildaufnahmeeinrichtungen gemäß Figur 1 in Betriebsstellung;

Figur 3: eine schematische Schnittansicht von der Seite einer Anordnung der Bildaufnahmeeinrichtungen gemäß Figur 1 in Betriebsstellung;

Figur 4: eine schematische Schnittansicht in Draufsicht einer weiteren bevorzugten Ausführungsform der Vorrichtung gemäß der vorliegenden Erfindung in Betriebsstellung;

Figur 5: eine schematische Ansicht von beispielhaften Bilddaten;

Figur 6: eine weitere schematische Ansicht von beispielhaften Bilddaten;

Figur 7: beispielhafte Bilddaten gemäß der Figur 5;

Figur 8: beispielhafte Bilddaten gemäß der Figur 6;

Figur 9: beispielhafte Ausgabedaten, wie sie gemäß einer bevorzugten Ausführungsform der vorliegenden Erfindung ausgegeben werden.

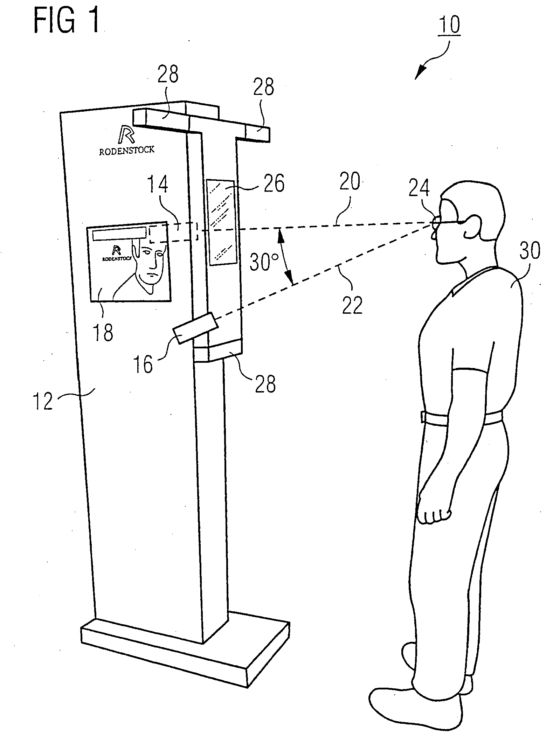

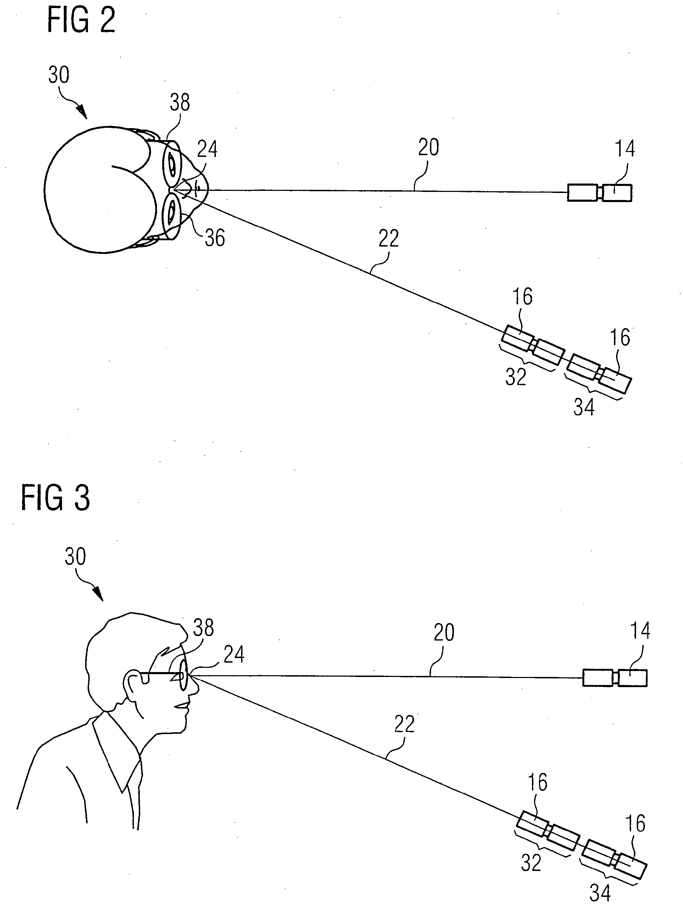

**Figur** 1 zeigt eine schematische Perspektivenansicht einer Vorrichtung 10 gemäß einer bevorzugten Ausführungsform der vorliegenden Erfindung. Die Vorrichtung 10 umfaßt eine Anordnungseinrichtung in Form eines Gehäuses bzw. einer Säule 12, an welcher eine erste Bildaufnahmeeinrichtung in Form einer oberen Kamera 14 und eine zweite Bildaufnahmeeinrichtung in Form einer seitlichen Kamera 16 angeordnet ist. Ferner ist in die Säule 12 eine Datenausgabeeinrichtung in Form eines Monitors 18 integriert. Die obere Kamera 14 befindet sich vorzugsweise im Inneren der Säule 12, beispielsweise wie in Figur 1 gezeigt, zumindest teilweise auf gleicher Höhe wie der Monitor 18. In Betriebsstellung sind die obere Kamera 14, und die seitliche Kamera 16 derart angeordnet, daß sich eine effektive optische Achse 20 der oberen Kamera 14 mit einer effektiven optischen Achse 22 der seitlichen Kamera 16 in einem Schnittpunkt 24 schneiden. Bei dem Schnittpunkt 24 der effektiven optischen Achsen 20, 22 handelt es sich vorzugsweise um den Punkt einer Nasenwurzel (vergleiche Figur 2).

Die obere Kamera 14 ist vorzugsweise mittig hinter einem teildurchlässigen Spiegel 26 angeordnet. Die Bilddaten der oberen Kamera 14 werden durch den teildurchlässigen Spiegel 26 hindurch erzeugt. Die Bilddaten (im folgenden Bilder genannt) der oberen Kamera 14 und der seitlichen Kamera 16 werden vorzugsweise an dem Monitor 18 ausgegeben. Weiterhin sind an der Säule 12 der Vorrichtung 10 drei Leuchtmittel 28 angeordnet. Bei den Leuchtmitteln 28 kann es sich beispielsweise um Leuchtstäbe, wie Leuchtstoffröhren handeln. Die Leuchtmittel 28 können jedoch auch jeweils eine oder mehrere Glühbirnen, Halogenleuchten, Leuchtdioden, etc. beinhalten.

In der in Figur 1 dargestellten bevorzugten Ausführungsform der Vorrichtung 10 der vorliegenden Erfindung ist die effektive optische Achse 20 der oberen Kamera 14 parallel zu der Nullblickrichtung eines Benutzers 30 angeordnet. Die Nullblickrichtung entspricht der Fixierlinie der Augen des Benutzers in Primärstellung. Die seitliche Kamera 16 ist derart angeordnet, daß die effektive optische Achse 22 der seitlichen Kamera 16 die effektive optische Achse 20 der oberen Kamera 14 in einem Schnittpunkt 24 unter einem Schnittwinkel von näherungsweise 30° schneidet. Bei dem Schnittpunkt 24 der effektiven optischen Achsen 20, 22 handelt es sich vorzugsweise um den Punkt einer Nasenwurzel (vgl. Figur 2) des Benutzers 30. Das heißt in der bevorzugten Ausführungsform der Vorrichtung 10 der vorliegenden Erfindung schneidet die effektive optische Achse 22 ebenfalls die Nullblickrichtung unter einem Winkel von 30°. Bei dem Schnittwinkel von 30° handelt es sich um einen bevorzugten Schnittwinkel. Es sind auch andere Schnittwinkel möglich. Vorzugsweise ist der Schnittwinkel jedoch kleiner als etwa 60°.

Weiterhin ist es nicht notwendig, daß sich die effektiven optischen Achsen 20, 22 schneiden. Vielmehr ist es auch möglich, daß der minimale Abstand der effektiven optischen Achsen von dem Ort der Nasenwurzel des Benutzers 30 beispielsweise weniger als näherungsweise 10 cm beträgt. Weiterhin ist es möglich, daß eine weitere seitliche Kamera (nicht gezeigt) an der Säule 12 angeordnet ist, wobei die weitere seitliche Kamera beispielsweise der seitlichen Kamera 16 schräg gegenüberliegt.

In einer weiteren bevorzugten Ausführungsform können die obere Kamera 14 und die seitliche Kamera 16 derart angeordnet sein, daß ihre Positionen und insbesondere ihre effektiven optischen Achsen beispielsweise an die Körpergröße des Benutzers 30 angepaßt werden können. Die Bestimmung der relativen Positionen der Kameras 14, 16 zueinander kann anhand eines bekannten Kalibrierverfahrens vorgenommen werden.

Die Kameras 14, 16 können weiterhin beispielsweise ausgelegt sein, jeweils einzelne Bilder eines Teilbereichs des Kopfes des Benutzers 30 zu erzeugen. Es ist aber auch möglich, daß anhand der Kameras 14, 16 Videosequenzen aufgenommen werden und diese Videosequenzen zur weiteren Auswertung benutzt werden. Vorzugsweise werden jedoch an den Kameras 14, 16 Einzelbilder erzeugt und diese Einzelbilder zur weiteren Auswertung benutzt, wobei die obere Kamera 14 und die seitliche Kamera 16 zeitsynchronisiert sind, das heißt zeitgleich Bilder des vorzugsweise identischen Teilbereichs des Kopfes des Benutzers 30 aufnehmen bzw. erzeugen. Ferner ist es möglich, daß von beiden Kameras 14, 16 Bilder unterschiedlicher Bereiche des Kopfes des Benutzers 30 aufgenommen werden. Die Bilder der beiden Kameras enthalten aber zumindest einen identischen Teilbereich des Kopfes des Benutzers 30.

In Betriebsstellung ist der Benutzer vorzugsweise derart angeordnet bzw. positioniert, daß sein Blick auf den teildurchlässigen Spiegel 26 gerichtet ist, wobei der Benutzer auf die Abbildung seiner Nasenwurzel (vgl. Figur 2) in dem Spiegelbild des teildurchlässigen Spiegels 26 blickt.

Die Säule 12 kann eine beliebige andere Form aufweisen bzw. ein andersartiges Gehäuse darstellen, in welchem die Kameras 14, 16 und beispielsweise die Leuchtmittel 28, der teildurchlässige Spiegel 26 und der Monitor 18 angeordnet sind.

In Betriebsstellung beträgt der Abstand zwischen dem teildurchlässigen Spiegel 26 und dem Benutzer 30 lediglich zwischen etwa 50 und 75 cm, wobei der Benutzer 30 beispielsweise vor dem Spiegel steht bzw. gemäß einer Tätigkeit, zu welcher der Benutzer 30 eine Brille trägt, vor dem teildurchlässigen Spiegel 26 sitzt. Somit ist der Einsatz der bevorzugten erfindungsgemäßen Vorrichtung auch bei beschränkten räumlichen Verhältnissen möglich. Entsprechend kann Vorrichtung 10 beispielsweise so ausgelegt sein, daß die Positionen der oberen Kamera 14 und der seitlichen Kamera 16 und beispielsweise auch des teildurchlässigen Spiegels 26 und der Leuchtmittel 28 höhenverstellbar angeordnet sind. Die obere Kamera 14 kann sich daher auch oberhalb bzw. unterhalb des Monitors 18 befinden. Ferner ist es auch möglich, die Säule 12 bzw. die an der Säule 12 angeordnete obere Kamera 14, untere Kamera 16, teildurchlässigen Spiegel 26 und Leuchtmittel 28 um eine Horizontalachse im Bezugssystem der Erde zu kippen bzw. zu drehen.

Gemäß einer weiteren bevorzugten Ausführungsform der Erfindung kann beispielsweise die seitliche Kamera 16 durch eine Musterprojektionseinrichtung, wie beispielsweise einen herkömmlichen Projektor, ersetzt werden und die dreidimensionalen Benutzerdaten anhand eines herkömmlichen Verfahrens, wie beispielsweise der phasenmessenden Triangulation, bestimmt werden.

**Figur 2** zeigt eine schematische Draufsicht bevorzugter Anordnungen der Kameras 14, 16 in Betriebsstellung und der Positionierung eines Benutzers 30 in Betriebsstellung. Wie in Figur 2 gezeigt, schneiden sich Projektionen der effektiven optischen Achsen 20, 22 auf eine horizontale Ebene im Bezugssystem der Erde unter einem Winkel von 23,5°. Der Schnittwinkel zwischen den effektiven optischen Achsen 20, 22 in der Ebene, welche durch die beiden effektiven optischen Achsen 20, 22 aufgespannt wird, beträgt, wie in Figur 1 gezeigt, 30°. Der Schnittpunkt 24 der effektiven optischen Achsen 20, 22 entspricht dem Ort der Nasenwurzel des Benutzers 30. Wie ferner aus Figur 2 hervorgeht, kann eine Position der seitlichen Kamera 16 beispielsweise entlang der effektiven optischen Achse 22 veränderbar sein. Die Position 32 der seitlichen Kamera 16 entspricht beispielsweise der Position, wie sie auch in Figur 1 dargestellt ist. Die seitliche Kamera 16 kann beispielsweise aber auch entlang der effektiven optischen Achse 22 an einer Position 34 versetzt angeordnet sein, vorzugsweise kann die seitliche Kamera 16 beliebig positioniert werden. In den von der seitlichen Kamera 16 erzeugten Bilddaten muß jedoch zumindest eine Pupille (nicht gezeigt) des Benutzers sowie zumindest ein Brillenglasrand 36 bzw. ein Brillenfassungsrand 36 einer Brille 38 des Benutzers abgebildet sein. Ferner muß die Pupille vorzugsweise vollständig innerhalb des Brillenfassungs- bzw. Glasrandes 36 der Brille 38 abgebildet sein. Analog kann auch die obere Kamera 14 anders positioniert sein.

**Figur 3** zeigt eine schematische Schnittansicht der Anordnung der Kameras 14, 16 in Betriebsstellung sowie einer Position des Benutzers 30 in Betriebsstellung, von der Seite, wie sie in Figur 1 gezeigt ist. Wie bereits in Figur 2 gezeigt, kann die seitliche Kamera 16 entlang der effektiven optischen Achse positioniert werden, beispielsweise an der Position 32 oder an der Position 34. Ferner ist in Figur 3 die Projektion der effektiven optischen Achsen 20, 22 auf eine Vertikalebene im Bezugssystem der Erde dargestellt. Der Winkel zwischen den effektiven optischen Achsen 20, 22 beträgt beispielsweise 23,5°, was einem Schnittwinkel von 30° in der Ebene entspricht, welche durch die effektiven optischen Achsen 20, 22 aufgespannt wird.

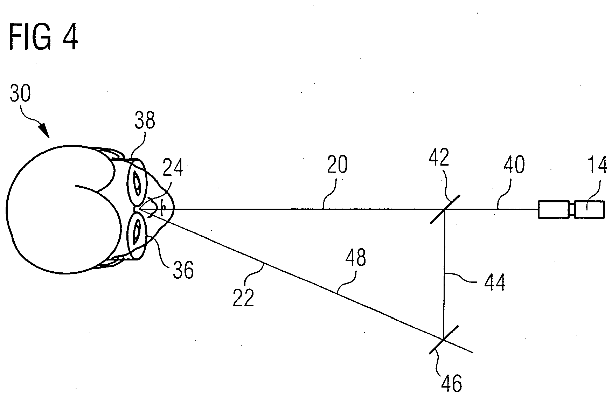

**Figur 4** zeigt in Draufsicht eine Schnittansicht einer zweiten bevorzugten Ausführungsform der Vorrichtung 10 gemäß der vorliegenden Erfindung. Anstelle von zwei Kameras wird lediglich die obere Kamera 14 verwendet. Die obere Kamera 14 weist eine optische Achse 40 auf. Die optische Achse 40 entspricht einer Linie, welche von einem Mittelpunkt der Apertur (nicht gezeigt) der oberen Kamera 14 ausgeht und senkrecht zu der Ebene der Apertur (nicht gezeigt) der oberen Kamera 14 ist.

Ausgehend von der oberen Kamera 14 befindet sich in Richtung der optischen Achse 40 ein Strahlteiler 42 im Strahlengang der Kamera 14. Der Strahlteiler 42 ist beispielsweise derart ausgelegt, daß zwischen zwei Betriebsarten gewechselt werden kann:

- der Strahlteiler 42 ist entweder nahezu vollständig verspiegelt oder

- der Strahlteiler ist nahezu vollständig durchlässig für Licht.

Ist der Strahlteiler 42 beispielsweise vollständig durchlässig für Licht, wird die optische Achse 40 der oberen Kamera 14 nicht umgelenkt, sondern schneidet den Kopf des Benutzers 30 in dem Schnittpunkt 24. In diesem Fall entspricht die effektive optische Achse 20 der optischen Achse 40 der oberen Kamera 14. Ist der Strahlteiler 42 hingegen vollständig verspiegelt, wird die optische Achse 40 der oberen Kamera 14 durch den Strahlteiler 42 gemäß bekannter optischer Gesetze umgelenkt, wie in Figur 4 dargestellt. Beispielsweise wird die optische Achse 40 um einen Winkel von 90° in einen ersten umgelenkten Teilbereich 44 der optischen Achse 40 der oberen Kamera 14 umgelenkt. Der erste umgelenkte Teilbereich 44 schneidet ein weiteres optisches Element, beispielsweise einen Umlenkspiegel 46. Dadurch wird der erste umgelenkte Teilbereich 44 der optischen Achse 40 erneut gemäß den herkömmlichen optischen Gesetzen in einen zweiten umgelenkten Teilbereich 48 der optischen Achse 40 umgelenkt. Der zweite umgelenkte Teilbereich 48 der optischen Achse 40 schneidet den Kopf des Benutzers 30. Der zweite umgelenkte Teilbereich 48 der optischen Achse 40 entspricht der effektiven Achse 22 der oberen Kamera 14, für den Fall, daß der Strahlteiler 42 vollständig verspiegelt ist.

Von der oberen Kamera 14 werden zeitversetzt Bilder des Teilbereichs des Kopfes des Benutzers 30 erzeugt, wobei die Bilder entweder bei vollständig verspiegeltem Strahlteiler 42 oder bei vollständig durchlässigem Strahlteiler 42 erzeugt werden. In anderen Worten können anhand der oberen Kamera 14 zwei Bilder des Teilbereichs des Kopfes des Benutzers 30 erzeugt werden, welche den Bildern entsprechend, wie sie gemäß Figur 1, 2 oder 3 erzeugt werden können. Jedoch werden die Bilder in dieser bevorzugten Ausführungsform zeitversetzt von einer Bildaufnahmeeinrichtung, der oberen Kamera 14, erzeugt.

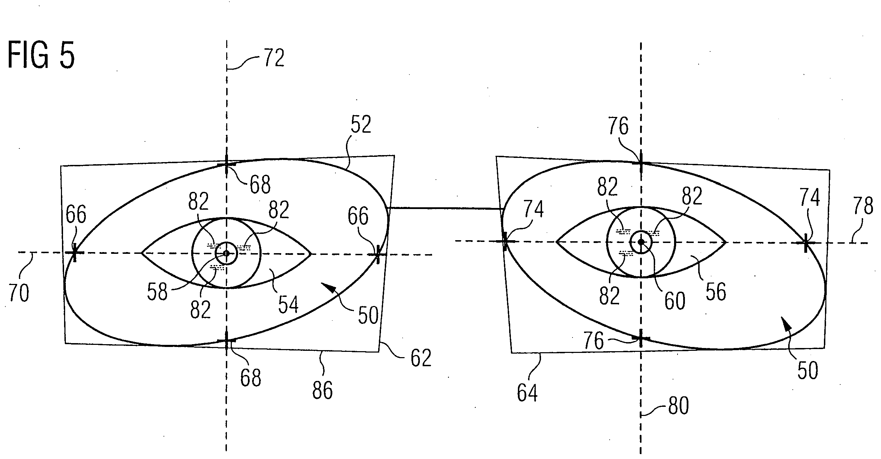

**Figur 5** zeigt eine schematische Ansicht von Bilddaten wie sie von der oberen Kamera 14 erzeugt werden, d.h. eine schematische Frontalansicht eines Teilbereichs des Kopfes eines Benutzers 30, wobei lediglich zwei Brillengläser 50, sowie eine Brillenfassung 52 sowie ein rechtes Auge 54 und ein linkes Auge 56 des Benutzers 30 dargestellt sind. Als Benutzerdaten sind in Figur 5 ein Pupillenmittelpunkt 58 des rechten Auges 54 und ein Pupillenmittelpunkt 60 des linken Auges 56 dargestellt. Ferner zeigt Figur 5 eine Begrenzung 62 der Brillenfassung 52 für das rechte Auge 54 und eine Begrenzung 64 der Brillenfassung 52 für das linke Auge 56 im Kastenmaß, sowie Schnittpunkte 66 eine im Bezugssystem des Benutzers horizontalen Ebene mit dem Brillenfassungsrand 52 bezüglich des rechten Auges 54 sowie Schnittpunkte 68 einer im Bezugssystem des Benutzers 30 vertikalen Ebene senkrecht zu der horizontalen Ebene des Benutzers 30. Die horizontale Ebene ist durch die Strichlinie 70, die vertikale Ebene durch die Strichlinie 72 dargestellt.

Analog sind in Figur 5 Schnittpunkte 74 einer horizontalen Ebene und Schnittpunkte 76 einer vertikalen Ebene für das linke Auge 56 gezeigt, wobei die horizontale Ebene durch die Strichlinie 78 und die vertikalen Ebene durch die Strichlinie 80 dargestellt ist.

Vorzugsweise werden die Pupillenmittelpunkte 58, 60 automatisch von einer Benutzerdatenpositionierungseinrichtung (nicht gezeigt) bestimmt. Hierzu werden Reflexe 82 verwendet, welche an der Hornhaut der jeweiligen Augen 54, 56 aufgrund der Leuchtmittel 28 entstehen. Da gemäß der in Figur 1 gezeigten Ausführungsformen der Vorrichtung 10 der vorliegenden Erfindung beispielsweise drei Leuchtmittel 28 angeordnet sind, werden pro Auge 54, 56 drei Reflexe 82 abgebildet. Die Reflexe 82 entstehen für jedes Auge 54, 56 direkt am Durchstoßpunkt einer jeweiligen Leuchtmittelfixierlinie an der Hornhaut. Bei der Leuchtmittelfixierlinie (nicht gezeigt) handelt es sich um die Verbindungsgerade zwischen dem Ort des jeweiligen Leuchtmittels 28, der auf der Netzhaut zentral abgebildet wird, und dem jeweiligen Pupillenmittelpunkt 58, 60 des entsprechenden Auges 54, 56. Die Verlängerung der Leuchtmittelfixierlinie (nicht gezeigt) geht durch den optischen Augendrehpunkt (nicht gezeigt). Vorzugsweise sind die Leuchtmittel 28 derart angeordnet, daß sie auf einer Kegelmantelfläche liegen, wobei sich die Spitze des Kegels an dem Pupillenmittelpunkt 58 bzw. 60 des rechten Auges 54 bzw. linken Auges 56 befindet. Die Symmetrieachse des Kegels ist ausgehend von der Kegelspitze parallel zu der effektiven optischen Achse 20 der oberen Kamera 14 angeordnet, wobei die drei Leuchtmittel 28 ferner so angeordnet sind, daß sich Verbindungsgeraden der Kegelspitze und des jeweiligen Leuchtmittels 28 lediglich in der Kegelspitze schneiden.

Anhand der Reflexe 82 für das rechte Auge 54 bzw. das linke Auge 56 kann der Pupillenmittelpunkt 58 bzw. 60 des rechten Auges 54 bzw. des linken Auges 56 bestimmt werden.

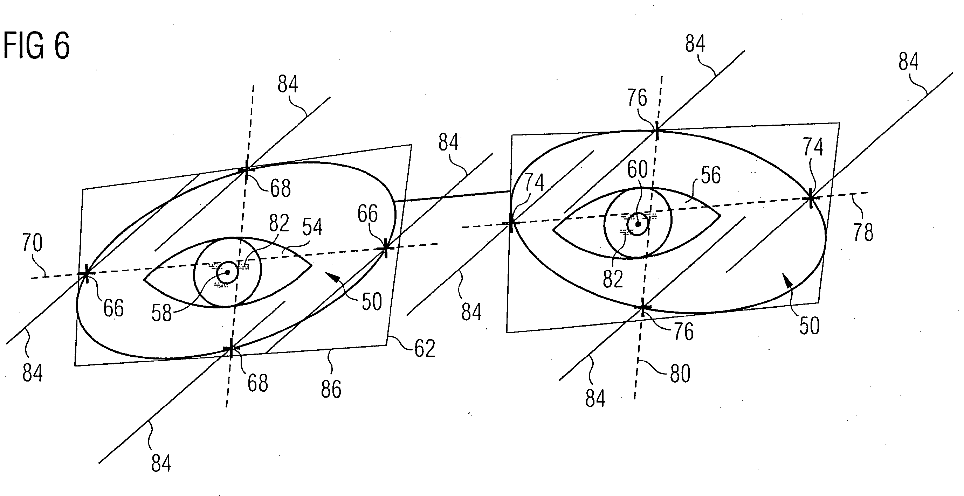

**Figur 6** zeigt eines Schemaansicht der Bilddaten der seitlichen Kamera 16 gemäß der Figur 5. Da sich die seitliche Kamera 16 seitlich unterhalb des Teilbereiches des Kopfes des Benutzers 30 befindet, liegen Schnittpunkte einer horizontalen und einer vertikalen Ebene mit den Rändern der Brillenfassung 52 nicht auf horizontalen bzw. vertikalen Geraden, wie dies in Figur 5 der Fall ist. Vielmehr werden Geraden, auf welchen Schnittpunkte mit der horizontale Ebene und der vertikalen Ebene liegen, aufgrund der perspektivischen Ansicht der seitlichen Kamera 16 auf schiefe Geraden 84 projiziert. Die horizontale Ebene 70 und die vertikale Ebene 72 schneiden daher den Rand 36 der Brillenfassung 52 an den Orten, in denen die projizierten Geraden 84 den Rand 36 der Brillenfassung 52 jeweils schneiden. Analog können auch anhand der in Figur 6 dargestellten Bilddaten die Pupillenmittelpunkte 58, 60 anhand der Reflexe 82 bestimmt werden.

Mittels der in den Figuren 5 und 6 gezeigten Schnittpunkte 66, 68, 74, 76 und der Pupillenmittelpunkte 58, 60 können dreidimensionale Koordinaten des Systems Brille 30 und Auge(n) 54, 56 erzeugt werden. Weiterhin können zur Bestimmung der dreidimensionalen Koordinaten bestimmte Punkte im Kastenmaß herangezogen werden. Alternativ können die dreidimensionalen Koordinaten zumindest teilweise gegebenenfalls auch mittels der gemäß Kastenmaß bestimmten Punkte erzeugt werden. Anhand der Positionen in den Bilddaten, das heißt der Schnittpunkte 66, 68, 74, 76 und der Pupillenmittelpunkte 58, 60, können unter Kenntnis der Positionen der oberen Kamera 14 und der seitlichen Kamera 16 Ortsrelationen im dreidimensionalen Raum im System Auge(n) 54, 56 und Brille 30 erzeugt werden. Die Schnittpunkte 66, 68, 72, 74 bzw. die Pupillenmittelpunkte 58, 60 können von einem Optiker bestimmt, und anhand einer Computermaus (nicht gezeigt) eingegeben werden. Alternativ kann der Monitor 18 als "touch screen" ausgelegt sein und die Schnittpunkte 66, 68, 72, 74 bzw. die Pupillenmittelpunkte 58, 60 können direkt anhand des Monitors 18 bestimmt und eingegeben werden. Alternativ können diese Daten aber auch automatisch anhand einer Bilderkennungssoftware erzeugt werden. Insbesondere ist es möglich, daß eine softwaregestützte Bildauswertung subpixelgenau erfolgt. Gemäß einer weiteren Ausführungsform der Erfindung können die Positionen weiterer Punkte der Brille 38 bestimmt werden und zur Bestimmung der optischen Parameter im dreidimensionalen Raum benutzt werden.

Anhand der dreidimensionalen Benutzerdaten des Systems Auge 54, 56 und Brille 30 können optische Parameter des Benutzers 30 bestimmt werden, wobei in dieser Bestimmung Kopf- und Blickbewegungen berücksichtigt werden können. Hierzu werden beispielsweise eine Vielzahl von Bildern erzeugt, wobei der Benutzer 30 eine Kopfbewegung ausführt bzw. beispielsweise ein bewegtes Objekt mit den Augen verfolgt. Alternativ ist es auch möglich, Bilder bei diskreten Kopf- bzw. Blickauslenkungen zu erzeugen, welche beispielsweise zur Bestimmung eines Konvergenzverhaltens der Augen bzw. zur Bestimmung von Unterschieden im Blickauslenkungsverhalten herangezogen werden können. Wie in Figur 1 dargestellt, ist der Benutzer vorzugsweise in Primärstellung positioniert und, wie aus Figur 2 hervorgeht, sind beispielsweise die effektive optische Achse 20 der oberen Kamera 14 und die Mittelparallele der Fixierlinien der Augen 54, 56 in Primärstellung, identisch. Eine weitere Ausführungsform der Vorrichtung 10 der vorliegenden Erfindung ist derart ausgelegt, daß lediglich ein Auge, das heißt entweder das rechte Auge 54 oder das linke Auge 56, sowohl von der oberen Kamera 14 als auch der seitlichen Kamera 16 abgebildet ist. Die optischen Parameter des Benutzers 30 werden anhand des einen Auges 54, 56 bestimmt und unter Symmetrieannahmen die optischen Parameter für beide Augen 54, 56 bestimmt.

Vorteilhafterweise können gemäß der Vorrichtung 10 der vorliegenden Erfindung die optischen Parameter, das heißt beispielsweise Pupillendistanz, Hornhautscheitelabstand, Fassungsscheibenwinkel, Vorneigung und Einschleifhöhe für einen Benutzer 30 bestimmt werden, dessen Blickauslenkung nicht der Nullblickrichtung entspricht. Vielmehr blickt der Benutzer 30 gemäß der vorliegenden Erfindung aus einer Distanz von etwa 50 bis etwa 75 cm auf das Abbild seines Nasenrückens in dem teildurchlässigen Spiegel 26. In anderen Worten befindet sich der Benutzer 30 in einem Abstand von etwa 50 bis etwa 75 cm vor dem teildurchlässigen Spiegel 26, und blickt auf das Abbild seines Gesichts in dem teildurchlässigen Spiegel 26, insbesondere auf seine Nasenwurzel. Die Stellung der Augen 54, 56, welche durch das angeblickte Objekt entsteht, das heißt die Konvergenz der Augen 54, 56, kann bei der Bestimmung der optischen Parameter berücksichtigt werden und beispielsweise Drehungen der Augen bei der Bestimmung der optischen Parameter kompensiert werden, wobei beispielsweise eine virtuelle Nullblickrichtung unter Berücksichtigung der tatsächlichen Blickauslenkung bestimmt werden kann und anhand der virtuellen, d.h. der bestimmten und nicht gemessenen Nullblickrichtung dir optischen Parameter des Benutzers bestimmt werden können. Vorteilhafterweise kann daher die Distanz zwischen Benutzer 30 und den Kameras 14, 16 gering sein. Insbesondere ist es auch möglich, daß die optischen Parameter bereits näherungsweise vorbestimmt werden. Ferner kann die Brille 38 vorangepaßt sein und die optischen Parameter werden mittels der Vorrichtung 10 der vorliegenden Erfindung für die vorangepaßte bestimmt.

Weiterhin ist die Vorrichtung 10 gemäß einer weiteren bevorzugten Ausführungsform ausgelegt, den Vorneigungswinkel der Brille 38 für jedes Auge 54, 56 aus dem Winkel zwischen der Geraden durch den oberen Schnittpunkt 68 und dem unteren Schnittpunkt 68 der vertikalen Schnittebene 72 mit dem Rand 36 der Brillenfassung 52 im Dreidimensionalen zu berechnen. Außerdem kann eine mittlere Vorneigung aus der für das rechte Auge 54 bestimmten Vorneigung und der für das linke Auge 56 bestimmten Vorneigung bestimmt werden. Ferner kann ein Warnhinweis ausgegeben werden, falls die Vorneigung des rechten Auges 54 von der Vorneigung des linken Auges 56 um zumindest einen vorbestimmten Maximalwert abweicht. Ein solcher Hinweis kann beispielsweise mittels des Monitors 18 ausgegeben werden. Analog können Fassungsscheibenwinkel und Hornhautscheitelabstand bzw. Pupillendistanz aus dem dreidimensionalen Datensatz für das rechte Auge 54 und das linke Auge 56 sowie Mittelwerte davon bestimmt werden und gegebenenfalls Hinweise über den Monitor 18 ausgegeben werden, falls die Abweichungen der Werte für das rechte Auge 54 und das linke Auge 56 einen Maximalwert jeweils überschreiten.

Der Hornhautscheitelabstand kann wahlweise nach Bezugspunktforderung oder nach Augendrehpunktforderung berechnet werden. Gemäß der Bezugspunktforderung entspricht der Hornhautscheitelabstand dem Abstand des Scheitelpunktes des Brillenglases 50 von der Hornhaut an dem Durchstoßpunkt der Fixierlinie des Auges in Nullblickrichtung. Gemäß der Augendrehpunktforderung entspricht der Hornhautscheitelabstand dem minimalen Abstand der Hornhaut von dem Brillenglas 50.

Ferner kann die Vorrichtung 10 der vorliegenden Erfindung derart ausgelegt sein, daß die Einschleifhöhe des Brillenglases 50 anhand eines Abstandes des Durchstoßpunktes der Fixierlinie eines Auges 54, 56 in Primärstellung mit einer Glasebene eines Brillenglases 50 von einer unteren horizontalen Tangente in der Glasebene berechnet wird. Eine untere horizontale Tangente ist beispielsweise in den Figuren 5 und 6 die Linie 84 der Begrenzung 62, 64 gemäß Kastenmaß. Vorzugsweise ist die Vorrichtung 10 ausgelegt, daß aus Punkten am Rand 36 der Brillenfassung 52 für jedes Auge 54, 56 ein dreidimensionaler geschlossener Streckenzug für die Glasform des Brillenglases 50 bestimmt wird, wobei aus Streckenzügen der jeweiligen Brillengläser 50 des rechten Auges 54 und des linken Auges 56 ein gemittelter Streckenzug für die Glasform bestimmt werden kann.

Alternativ ist es auch möglich, daß anstelle einer Mittelung der Werte der optischen Parameter, welche für das rechte Auge 54 und das linke Auge 56 bestimmt werden, die optischen Parameter, bzw. der Streckenzug für die Glasform lediglich für das Brillenglas 50 eines der Augen 54, 56 bestimmen wird und diese Werte auch für das andere der Augen 54, 56 verwendet werden.

Weiterhin kann die Vorrichtung gemäß einer bevorzugten Ausführungsform verwendet werden, Bilder des Benutzers 30 zu erzeugen und diesen Bildern Bilddaten einer Vielzahl von Fassungs- und/oder Brillenglasdaten zu überlagern, wodurch ein optimale Beratung des Benutzers 30 möglich ist. Insbesondere können Materialien, Schichten, Dicke und Farben der Brillengläser, deren Bilddaten den erzeugten Bilddaten überlagert werden, variiert werden. Die Vorrichtung 10 gemäß der vorliegenden Erfindung kann daher ausgelegt sein, Anpassungsempfehlungen, insbesondere optimierte Individualparameter für eine Vielzahl unterschiedlicher Brillenfassungen bzw. Brillengläser bereitzustellen.

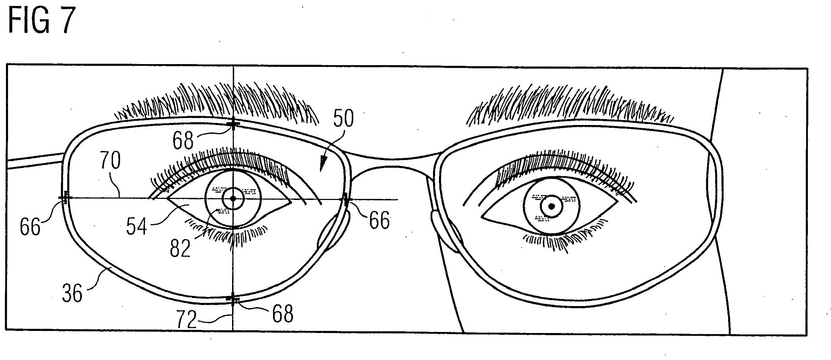

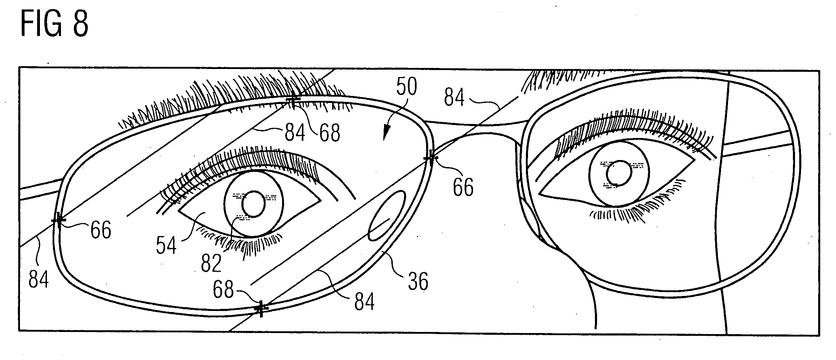

Die **Figuren 7 und 8** zeigen Bilder, welche beispielsweise von der oberen Kamera 16 (Figur 7) und der seitlichen Kamera 16 (Figur 8) erzeugt werden. Die Bilder zeigen weiterhin die Schnittpunkte 66, 68 der horizontalen Ebene 70 und der vertikalen Ebene 72, sowie die Reflexe 82 für das rechte Auge 54 des Benutzers 30. In Figur 8 sind Projektionen der möglichen Schnittpunkte der horizontalen Ebene 70 und vertikale Ebene 72 mit dem Rand 36 der Brillenfassung 52 unter Berücksichtigung der perspektivischen Ansicht der seitlichen Kamera 16, als Geraden 84, dargestellt.

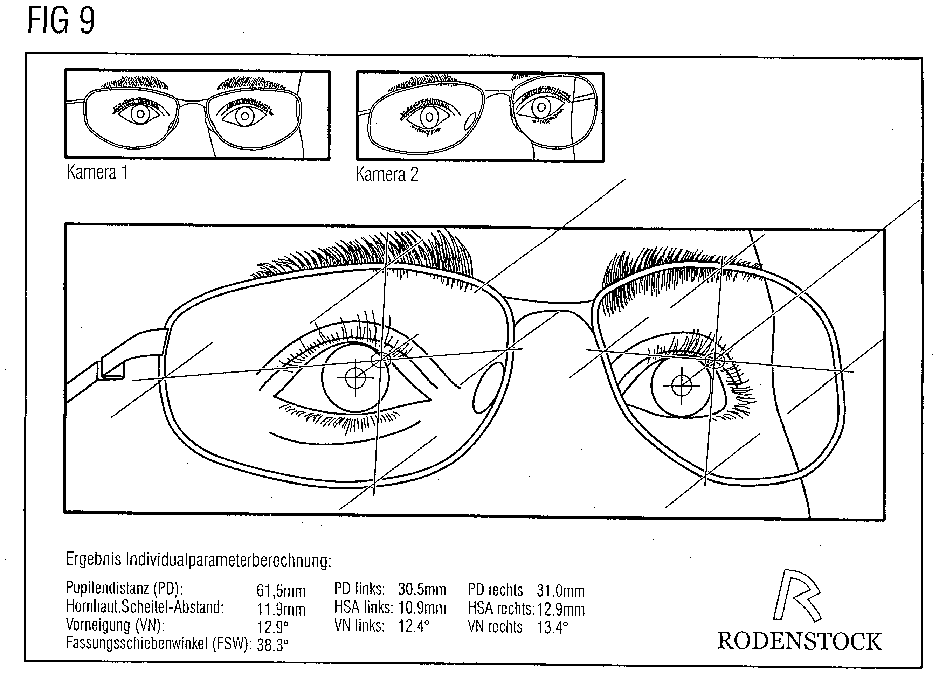

**Figur 9** zeigt ein Ausgabebild, wie es beispielsweise auf dem Monitor 18 dargestellt werden kann, wobei die Bilddaten der oberen Kamera 14 (bezeichnet als Kamera 1) und der seitlichen Kamera 16 (bezeichnet als Kamera 2) dargestellt sind. Ferner ist ein Bild der seitlichen Kamera 16 dargestellt, in welches die Benutzerdaten eingeblendet sind. Weiterhin sind die optischen Parameter für das rechte Auge 54 und das linke Auge 56, sowie Mittelwerte davon, dargestellt.

Vorzugsweise werden mehrere Leuchtmittel 28 so angeordnet, daß für alle Kameras 14, 16 Reflexe 82 für jedes Auge 54, 56 direkt am Durchstoßpunkt der jeweiligen Fixierlinie an der Hornhaut oder geometrisch definiert, um den Durchstoßpunkt, erzeugt werden. Weiter werden die Leuchtmittel 28 vorzugsweise so angeordnet, daß die Reflexe 82 insbesondere für den Durchstoßpunkt der jeweiligen Fixierlinie der Augen 54, 56 in Primärstellung erzeugt werden. Ganz besonders bevorzugt werden, für beide Augen näherungsweise geometrisch definierte Hornhautreflexe um den Durchstoßpunkt für die obere Kamera 14 und für die seitliche Kamera 16 Reflexe an den Durchstoßpunkten der Fixierlinien der Augen 54, 56 in Primärstellung, durch ein Leuchtmittel 28 auf der an der jeweiligen Mittelparallele der beiden Fixierlinien der Augen 54, 56 in Primärstellung gespiegelten effektiven optischen Achse 22 der seitlichen Kamera 16 und zwei weiteren Leuchtmitteln 28, die auf dem Kegel der durch die Mittelparallele der Fixierlinien der Augen 54, 56 in Primärstellung als Kegelachse und die effektive optische Achse 20 der seitlichen Kamera 16 als Erzeugende definiert wird, derart angeordnet werden, daß alle Leuchtmittel 28 auf disjunkten Erzeugenden des Kegels liegen und die eingesetzten Leuchtmittel 28 eine horizontale Ausdehnung haben, die der Gleichung

(mittlerer Pupillenabstand) / (horizontale Ausdehnung) = (Abstand obere Kamera 14 zum Auge 54, 56) / (Abstand Leuchtmittel 28 zum Auge 54, 56)

genügen.

Die vorliegende Erfindung ist nicht auf die oben beschriebenen besonders bevorzugten Ausführungsformen beschränkt. Vielmehr umfaßt die Erfindung auch Variationen davon.

**Bezugszeichenliste**

| 10 | Vorrichtung |
| 12 | Säule |
| 14 | obere Kamera |
| 16 | seitliche Kamera |
| 18 | Monitor |
| 20 | effektive optische Achse |
| 22 | effektive optische Achse |
| 24 | Schnittpunkt |
| 26 | teildurchlässiger Spiegel |

28    Leuchtmittel
30    Benutzer
32    Position
34    Position
36    Brillenglasrand / Brillenfassungsrand
38    Brille
40    optische Achse
42    Strahlteiler
44    erster umgelenkter Teilbereich der optischen Achse
46    Umlenkspiegel
48    zweiter umgelenkter Teilbereich der optischen Achse
50    Brillengläser
52    Brillenfassung
54    rechtes Auge
56    linkes Auge
58    Pupillenmittelpunkt
60    Pupillenmittelpunkt
62    Begrenzung im Kastenmaß
64    Begrenzung im Kastenmaß
66    Schnittpunkte
68    Schnittpunkte
70    horizontale Ebene
72    vertikale Ebene
74    Schnittpunkte
76    Schnittpunkte
78    horizontale Ebene
80    vertikale Ebene
82    Reflexe
84    Gerade
86    untere horizontale Tangente

**Patentansprüche**

1.  Verwendung einer Vorrichtung (10) zum Bestimmen von optischen Parametern eines eine Brille in einer Gebrauchsstellung tragenden Benutzers (30), wobei die Vorrichtung (10) aufweist:

    - zumindest zwei Bildaufnahmeeinrichtungen (14, 16), welche ausgelegt und angeordnet sind, jeweils Bilddaten
    zumindest von Teilbereichen des Kopfes des Benutzers (30) zu erzeugen;
    - eine Datenverarbeitungseinrichtung mit

    -- einer Benutzerdatenbestimmungseinrichtung, welche ausgelegt ist, anhand der erzeugten Bilddaten
    Benutzerdaten zumindest eines Teilbereichs des Kopfes oder zumindest eines Teilbereichs eines Systems
    des Kopfes und einer daran in Gebrauchsstellung angeordneten Brille (38) des Benutzers (30) zu bestimmen, wobei die Benutzerdaten Ortsinformationen im dreidimensionalen Raum von vorbestimmten Punkten
    des Teilbereichs des Kopfes oder des Teilbereichs des Systems umfassen und
    -- einer Parameterbestimmungseinrichtung, welche ausgelegt ist, anhand der Benutzerdaten zumindest
    einen Teil der optischen Parameter des Benutzers (30) zu bestimmen; und

    - eine Datenausgabeeinrichtung, welche zur Ausgabe zumindest eines Teils der bestimmten optischen Parameter des Benutzers (30) ausgelegt ist,

    die Bildaufnahmeeinrichtungen (14, 16) derart ausgelegt und angeordnet sind, daß in den erzeugten Bilddaten jeder
    der Bildaufnahmeeinrichtungen (14, 16) zumindest eine Pupille des Benutzers (30) abgebildet ist und ein Brillenfassungsrand und/oder ein Brillenglasrand (36) abgebildet ist, wobei in den erzeugten Bilddaten jeder der Bildaufnahmeeinrichtungen (14, 16) die zumindest eine Pupille des Benutzers (30) von dem Brillenfassungsrand und/oder
    dem Brillenglasrand umgrenzt ist.

**2.** Verwendung nach Anspruch 1, wobei die Benutzerdaten Ortsinformationen für zumindest einen der folgenden Punkte umfassen:

- Schnittpunkte (66, 74) einer im Bezugssystem des Benutzers (30) horizontalen Ebene (70, 78) mit den Brillenglasrändern und/oder den Brillenfassungsrändern (36) der Brille (38), wobei die horizontale Ebene (70, 78) des Benutzers (30) beide Pupillen des Benutzers (30) schneidet und parallel zur Nullblickrichtung des Benutzers (30) verläuft;
- Schnittpunkte (68, 76) einer im Bezugssystem des Benutzers (30) vertikalen Ebene (72, 80) mit den Brillenglasrändern und/oder den Brillenfassungsrändern (36) der Brille (38), wobei die vertikale Ebene (72, 80) des Benutzers (30) senkrecht zu der horizontalen Ebene (70, 78) des Benutzers (30) und parallel zu der Nullblickrichtung des Benutzers verläuft und eine Pupille des Benutzers (30) schneidet;
- zumindest einen Pupillenmittelpunkt (58, 60);
- Begrenzungen (62, 64) zumindest eines Brillenglases des Benutzers nach einer Bemaßung im Kastenmaß;
- Brückenmittelpunkt der Brillenfassung (52) der Brille (38).

**3.** Verwendung nach einem der vorhergehenden Ansprüche, wobei die optischen Parameter zumindest einen der folgenden Werte des Benutzers (30) umfassen:

- Pupillendistanz;
- monokularer Pupillenabstand;
- Hornhautscheitelabstand nach Bezugspunktforderung und/oder nach Augendrehpunktforderung;
- monokularer Zentrierpunktabstand;
- Zentrierpunktkoordinaten;
- Scheibenabstand;
- Dezentration des Zentrierpunktes;
- Scheibenhöhe und -breite;
- Scheibenmittenabstand;
- Brillenglasvorneigung;
- Fassungsscheibenwinkel;
- Einschleifhöhe.

**4.** Verwendung nach einem der vorhergehenden Ansprüche, wobei in Betriebsstellung die Bildaufnahmeeinrichtungen (14, 16) innerhalb eines Raumbereiches angeordnet sind, welcher von einem Kegel mit einem vorbestimmten Öffnungswinkel umfangen ist, wobei die Kegelspitze des Kegels in einer Umgebung eines vorbestimmten Bezugspunktes angeordnet ist und die Kegelachse parallel zu einer vorbestimmten Richtung angeordnet ist, wobei betriebsmäßig die Nullblickrichtung des Benutzers (30) der vorbestimmten Richtung entspricht.

**5.** Verwendung nach Anspruch 4, wobei betriebsmäßig der Ort einer der Pupillen des Benutzers (30) oder der Ort einer Nasenwurzel des Benutzers (30) näherungsweise dem vorbestimmten Bezugspunkt entspricht.

**6.** Verwendung nach Anspruch 4 oder 5, wobei der Öffnungswinkel kleiner als 90° ist.

**7.** Verwendung nach Anspruch 6, wobei der Öffnungswinkel zwischen etwa 60° und etwa 10°, bevorzugt zwischen etwa 45° und etwa 20°, besonders bevorzugt etwa 30° beträgt.

**8.** Verwendung nach einem der vorhergehenden Ansprüche, wobei sich effektive optische Achsen (20, 22) der Bildaufnahmeeinrichtungen (14, 16) zumindest beinahe schneiden und ein Schnittwinkel zwischen etwa 60° und etwa 10°, vorzugsweise zwischen etwa 45° und etwa 20°, besonders bevorzugt etwa 30° beträgt, und/oder betriebsmäßig die Nullblickrichtung des Benutzers (30) im wesentlichen parallel zu der effektiven optischen Achse (20, 22) zumindest einer der Bildaufnahmeeinrichtungen (14, 16) angeordnet ist, und/oder die effektive optische Achse (20, 22) zumindest einer der Bildaufnahmeeinrichtungen (14, 16) im wesentlichen parallel zu einer Horizontalrichtung im Bezugssystem der Erde angeordnet ist, und/oder betriebsmäßig die Horizontalebene des Benutzers (30) derart angeordnet ist, daß die effektive optische Achse (20, 22) zumindest einer der Bildaufnahmeeinrichtungen (14, 16) darin liegt, und/oder in Betriebsstellung eine der Bildaufnahmeeinrichtungen (14, 16) derart angeordnet ist, daß ihre effektive optische Achse (22, 24) die Nasenwurzel des Benutzers (30) zumindest beinahe schneidet und/oder in Betriebsstellung eine der Bildaufnahmeeinrichtungen (14, 16) derart angeordnet ist, daß ihre effektive optische Achse (20, 22) symmetrisch bezüglich der Pupillen des Benutzers (30) angeordnet ist.

9. Verwendung nach einem der vorhergehenden Ansprüche, wobei sich Projektionen der effektiven optischen Achsen (20, 22) der zumindest zwei Bildaufnahmeeinrichtungen (14, 16) auf eine Horizontalebene im Bezugssystem der Erde unter einem Schnittwinkel schneiden, welcher zwischen etwa 10° und etwa 60°, vorzugsweise zwischen etwa 15° und etwa 40°, besonders bevorzugt etwa 23,5° beträgt, und/oder sich Projektionen der effektiven optischen Achsen (20, 22) der zumindest zwei Bildaufnahmeeinrichtungen (14, 16) auf eine Vertikalebene im Bezugssystem der Erde unter einem Schnittwinkel schneiden, welcher zwischen etwa 10° und etwa 60°, vorzugsweise zwischen etwa 15° und etwa 40°, besonders bevorzugt etwa 23,5° beträgt, und/oder in Betriebsstellung die Nullblickrichtung des Benutzers (30) parallel zu der Horizontalebene im Bezugssystem der Erde angeordnet ist.

10. Verwendung nach einem der vorhergehenden Ansprüche, wobei die Benutzerdatenbestimmungseinrichtung weiterhin eine Benutzerdatenpositionierungseinrichtung umfaßt, welche ausgelegt ist, vorbestimmten. Benutzerdaten Positionen im zweidimensionalen Raum der Bilddaten zuzuordnen.

11. Verwendung nach Anspruch 10, wobei die Benutzerdatenpositionierungseinrichtung derart ausgelegt ist, daß die Positionen in den Bilddaten, welche zumindest einem Teil der vorbestimmten Benutzerdaten zugeordnet werden, von einer Person zuordenbar sind.

12. Verwendung nach Anspruch 11, wobei die Benutzerdatenpositionierungseinrichtung ausgelegt ist, Positionen der Bilddaten, welche den vorbestimmten Benutzerdaten zugeordnet werden, unter Berücksichtigung von Ortsinformationen zumindest einer der Bildaufnahmeeinrichtungen (14, 16) im dreidimensionalen Raum vorzubestimmen.

13. Verwendung nach einem der Ansprüche 10 bis 12, wobei die Benutzerdatenpositionierungseinrichtung ausgelegt ist, zumindest einem Teil der Benutzerdaten Positionen im zweidimensionalen Raum der Bilddaten automatisch zuzuordnen.

14. Verwendung nach einem der vorhergehenden Ansprüche, wobei die zumindest zwei Bildaufnahmeeinrichtungen (14, 16) ausgelegt sind, die Bilddaten zeitgleich zu erzeugen, und/oder jede der Bildaufnahmeeinrichtungen (14, 16) zeitgleich Bilddaten von beiden Augen des Benutzers (30) erzeugt, und/oder die Bildaufnähmeeinrichtungen (14, 16) ausgelegt sind, Bilddaten des Benutzers (30) für eine Vielzahl von unterschiedlichen Blickrichtungen des Benutzers zu erzeugen.

15. Verwendung nach Anspruch 14, wobei die Datenverarbeitungsvorrichtung ausgelegt ist, anhand der Vielzahl der Bilddaten ein Sehverhalten des Benutzers (30) zu bestimmen.

**Claims**

1. Use of an apparatus (10) for determining optical parameters of a user (30) wearing glasses in a use position, wherein the apparatus (10) comprises:

   - at least two image capture devices (14, 16), which are designed and arranged to each generate image data at least from portions of the head of the user (30);
   - a data processing device comprising

      - a user-data determination device, which is designed to determine, on the basis of the generated image data, user data at least of one portion of the head, or at least of one portion of a system of the head, and glasses (38) of the user (30) that are arranged on the head in a use position, wherein the user data comprise location information in three-dimensional space relating to predetermined points on the portion of the head or the portion of the system, and
      - a parameter determination device, which is designed to determine at least some of the optical parameters of the user (30) on the basis of the user data; and

   - a data output device, which is designed to output at least some of the determined optical parameters of the user (30),

   and wherein
   the image capture devices (14, 16) are designed and arranged such that at least one pupil of the user (30) and a glasses frame edge and/or a glasses lens edge (36) are imaged in the generated image data from each of the image capture devices (14, 16), wherein, in the generated image data from each of the image capture devices (14, 16), the at least one pupil of the user (30) is surrounded by the glasses frame edge and/or the glasses lens edge.

2. Use according to claim 1, wherein the user data comprise location information for at least one of the following points:

- intersection points (66, 74) of a plane (70, 78) that is horizontal in the reference system of the user (30), which points intersect the glasses lens edges and/or the glasses frame edges (36) of the glasses (38), wherein the horizontal plane (70, 78) of the user (30) intersects both pupils of the user (30) and extends in parallel with the primary position of the user (30);

- intersection points (68, 76) of a plane (72, 80) that is vertical in the reference system of the user (30), which points intersect the glasses lens edges and/or the glasses frame edges (36) of the glasses (38), wherein the vertical plane (72, 80) of the user (30) extends perpendicularly to the horizontal plane (70, 78) of the user (30) and in parallel with the primary position of the user, and intersects one pupil of the user (30);
- at least one pupil centre (58, 60);
- boundaries (62, 64) for at least one glasses lens of the user according to dimensioning in the boxing system;
- bridge midpoint of the glasses frame (52) of the glasses (38).

3. Use according to either of the preceding claims, wherein the optical parameters comprise at least one of the following values of the user (30):

- pupillary distance;
- monocular pupillary spacing;
- corneal vertex spacing according to a reference point requirement and/or a requirement with respect to the centre of rotation of the eye;
- monocular centring point spacing;
- centring point coordinates;
- lens spacing;
- decentration of the centring point;
- lens height and width;
- lens centre-to-centre spacing;
- lens pantoscopic angle;
- face form angle;
- fitting height.

4. Use according to any of the preceding claims, wherein, in the operating position, the image capture devices (14, 16) are arranged within a spatial region that is surrounded by a cone comprising a predefined opening angle, wherein the cone point of the cone is arranged in the surroundings of a predefined reference point, and the cone axis is arranged in parallel with a predetermined direction, wherein, in operation, the primary position of the user (30) corresponds to the predetermined direction.

5. Use according to claim 4, wherein, in operation, the location of one of the pupils of the user (30) or the location of a nasal bridge of the user (30) approximately corresponds to the predetermined reference point.

6. Use according to either claim 4 or claim 5, wherein the opening angle is smaller than 90°.

7. Use according to claim 6, wherein the opening angle is between approximately 60° and approximately 10°, preferably between approximately 45° and approximately 20°, particularly preferably approximately 30°.

8. Use according to any of the preceding claims, wherein effective optical axes (20, 22) of the image capture devices (14, 16) at least almost intersect, and an intersection angle is between approximately 60° and approximately 10°, preferably between approximately 45° and approximately 20°, particularly preferably approximately 30°, and or, in operation, the primary position of the user (30) is arranged essentially in parallel with the effective optical axes (20, 22) of at least one of the image capture devices (14, 16), and/or the effective optical axes (20, 22) of at least one of the image capture devices (14, 16) are arranged essentially in parallel with a horizontal direction in the reference system of the Earth, and/or, in operation, the horizontal plane of the user (30) is arranged such that the effective optical axes (20, 22) of at least one of the image capture devices (14, 16) lie therein, and or, in the operating position, one of the image capture devices (14, 16) is arranged such that the effective optical axis (22, 24) thereof at least almost intersects the nasal bridge of the user (30) and/or, in the operating position, one of the image capture devices (14, 16) is arranged such that the effective optical axis (20, 22) thereof is arranged symmetrically relative to the pupils of the user (30).

9. Use according to any of the preceding claims, wherein projections of the effective optical axes (20, 22) of the at least two image capture devices (14, 16) intersect on a horizontal plane in the reference system of the Earth at an intersection angle which is between approximately 10° and approximately 60°, preferably between approximately 15° and approximately 40°, particularly preferably approximately 23.5°, and/or projections of the effective optical axes (20, 22) of the at least two image capture devices (14, 16) intersect on a vertical plane in the reference system of the Earth at an intersection angle which is between approximately 10° and approximately 60°, preferably between approximately 15° and approximately 40°, particularly preferably approximately 23.5°, and/or, in the operating position, the primary position of the user (30) is arranged in parallel with the horizontal plane in the reference system of the Earth.

10. Use according to any of the preceding claims, wherein the user-data determination device further comprises a user-data positioning device, which is designed to assign positions in the two-dimensional space of the image data to predetermined user data.

11. Use according to claim 10, wherein the user-data positioning device is designed such that the positions in the image data which are assigned to at least some of the predetermined user data can be assigned by a person.

12. Use according to claim 11, wherein the user-data positioning device is designed to assign positions of the image data which are assigned to the predetermined user data in consideration of location information at least of one of the image capture devices (14, 16) in three-dimensional space.

13. Use according to any of claims 10 to 12, wherein the user-data positioning device is designed to automatically assign positions in the two-dimensional space of the image data to at least some of the user data.

14. Use according to any of the preceding claims, wherein the at least two image capture devices (14, 16) are designed to simultaneously generate the image data, and/or each of the image capture devices (14, 16) simultaneously generates image data from both eyes of the user (30), and/or the image capture devices (14, 16) are designed to generate image data of the user (30) for a plurality of different viewing directions of the user.

15. Use according to claim 14, wherein the data processing apparatus is designed to determine vision behaviour of the user (30) on the basis of the plurality of image data.

**Revendications**

1. Utilisation d'un dispositif (10) pour la détermination de paramètres optiques d'un utilisateur (30) porteur de lunettes dans une position d'utilisation, ledit dispositif (10) comprenant :

- au moins deux dispositifs d'enregistrement d'image (14, 16), conçus et disposés pour générer des données d'image au moins de zones partielles de la tête de l'utilisateur (30) ;
- un dispositif de traitement de données avec

-- un dispositif de détermination de données d'utilisateur, conçu pour déterminer à partir des données d'image générées, des données d'utilisateur d'au moins une zone partielle de la tête ou d'au moins une zone partielle d'un système de la tête et de lunettes (38) de l'utilisateur (30) disposées sur celle-ci en position d'utilisation, les données d'utilisateur comprenant des informations locales dans un espace tridimensionnel de points définis de la zone partielle de la tête ou de la zone partielle du système, et
-- un dispositif de détermination de paramètres, conçu pour déterminer à partir des données d'utilisateur au moins une partie des paramètres optiques de l'utilisateur (30) ; et

- un dispositif d'édition de données, conçu pour l'édition d'au moins une partie des paramètres optiques déterminés pour l'utilisateur (30),

et dans laquelle

les dispositifs d'enregistrement d'image (14, 16) sont conçus et disposés de manière à représenter au moins une pupille de l'utilisateur (30) dans les données d'image générées de chacun des dispositifs d'enregistrement d'image (14, 16), et à représenter un bord de monture des lunettes et/ou un bord de verre des lunettes (36), ladite au moins une pupille de l'utilisateur (30) étant délimitée par le bord de monture des lunettes et/ou le bord de verre des lunettes dans les données d'image générées de chacun des dispositifs d'enregistrement d'image (14, 16) .

2. Utilisation selon la revendication 1, dans laquelle les données d'utilisateur comprennent des informations locales pour au moins un des points suivants :

- points d'intersection (66, 74) d'un plan horizontal (70, 78) dans le système de référence de l'utilisateur (30) avec les bords de verre des lunettes et/ou les bords de monture (36) des lunettes (38), le plan horizontal (70, 78) de l'utilisateur (30) coupant les deux pupilles de l'utilisateur (30) et s'étendant parallèlement à la ligne horizontale du regard de l'utilisateur (30) :
- points d'intersection (68, 76) d'un plan vertical (72, 80) dans le système de référence de l'utilisateur (30) avec les bords de verre des lunettes et/ou les bords de monture (36) des lunettes (38), le plan vertical (72, 80) de l'utilisateur (30) s'étendant perpendiculairement au plan horizontal (70, 78) de l'utilisateur (30) et parallèlement à la ligne horizontale du regard de l'utilisateur et coupant une pupille de l'utilisateur (30) ;
- au moins un centre de pupille (58, 60) ;
- délimitations (62 64) d'au moins un verre des lunettes de l'utilisateur après cotation dans la mesure en réseau ;
- point médian du pont de la monture (52) des lunettes (38) .

3. Utilisation selon l'une des revendications précédentes, dans laquelle les paramètres optiques comprennent au moins une des valeurs suivantes de l'utilisateur (30) :

- distance pupillaire ;
- écart monoculaire des pupilles ;
- écart du vertex de la cornée selon l'exigence du point de référence et/ou selon l'exigence du centre de rotation de l'oeil ;
- écart monoculaire de point de centrage ;
- coordonnées du point de centrage ;
- écart des verres ;
- décentrage du point de centrage ;
- hauteur et largeur des verres ;
- écart médian de verre ;
- pré-inclinaison de verre de lunettes ;
- angle des verres dans la monture;
- hauteur de rectification.

4. Utilisation selon l'une des revendications précédentes, dans laquelle, en position de service, les dispositifs d'enregistrement d'image (14, 16) sont situés à l'intérieur d'une zone spatiale entourée par un cône avec un angle d'ouverture défini, le sommet du cône étant situé dans l'environnement d'un point de référence défini et l'axe du cône étant parallèle à une direction définie, la ligne horizontale du regard de l'utilisateur (30) correspondant fonctionnellement à la direction définie.

5. Utilisation selon la revendication 4, dans laquelle la localisation d'une des pupilles de l'utilisateur (30) ou la localisation de la racine du nez de l'utilisateur (30) correspond fonctionnellement sensiblement au point de référence défini.

6. Utilisation selon la revendication 4 ou 5, dans laquelle l'angle d'ouverture est inférieur à 90°.

7. Utilisation selon la revendication 6, dans laquelle l'angle d'ouverture est compris entre environ 60° et environ 10°, préférentiellement entre environ 45° et environ 20°, et est tout particulièrement sensiblement égal à 30°.

8. Utilisation selon l'une des revendications précédentes, dans laquelle des axes optiques effectifs (20, 22) des dispositifs d'enregistrement d'image (14, 16) se croisent au moins sensiblement et un angle d'intersection est compris entre environ 60° et environ 10°, préférentiellement entre environ 45° et environ 20°, et est tout particulièrement sensiblement égal à 30°, et/ou la ligne horizontale du regard de l'utilisateur (30) est fonctionnellement sensiblement parallèle à l'axe optique effectif (20, 22) d'au moins un des dispositifs d'enregistrement d'image (14, 16), et/ou l'axe optique effectif (20, 22) d'au moins un des dispositifs d'enregistrement d'image (14, 16) est sensiblement parallèle à une direction horizontale dans le système de référence de la Terre, et/ou le plan horizontal de l'utilisateur (30) est fonctionnellement situé de manière à comprendre l'axe optique effectif (20, 22) d'au moins un des dispositifs d'enregistrement d'image (14, 16), et/ou un des dispositifs d'enregistrement d'image (14, 16) est situé en position de service de sorte que son axe optique effectif (22, 24) coupe au moins sensiblement la racine du nez de l'utilisateur (30) et/ou un des dispositifs d'enregistrement d'image (14, 16) est situé en position de service de sorte que son axe optique effectif (20, 22) est sensiblement symétrique par rapport aux pupilles de l'utilisateur (30).

9. Utilisation selon l'une des revendications précédentes, dans laquelle des projections des axes optiques effectifs (20, 22) des au moins deux dispositifs d'enregistrement d'image (14, 16) se croisent sur un plan horizontal dans le système de référence de la Terre suivant un angle d'intersection compris entre environ 10° et environ 60°, préférentiellement entre environ 15° et environ 40°, et tout particulièrement sensiblement égal à 23,5°, et/ou des projections des axes optiques effectifs (20, 22) des au moins deux dispositifs d'enregistrement d'image (14, 16) se croisent sur un plan vertical dans le système de référence de la Terre suivant un angle d'intersection compris entre environ 10° et environ 60°, préférentiellement entre environ 15° et environ 40°, et tout particulièrement égal à 23,5°, et/ou la ligne horizontale du regard de l'utilisateur (30) est en position de service parallèle au plan horizontal dans le système de référence de la Terre.

10. Utilisation selon l'une des revendications précédentes, dans laquelle le dispositif de détermination de données d'utilisateur comprend en outre un dispositif de positionnement de données d'utilisateur conçu pour associer des positions à des données d'utilisateur définies dans l'espace bidimensionnel des données d'image.

11. Utilisation selon la revendication 10, dans laquelle le dispositif de positionnement de données d'utilisateur est conçu de manière à permettre l'association par une personne des positions dans les données d'image qui sont associées à au moins une partie des données d'utilisateur définies.

12. Utilisation selon la revendication 11, dans laquelle le dispositif de positionnement de données d'utilisateur est conçu de manière à prédéterminer dans l'espace tridimensionnel les positions des données d'image qui sont associées aux données utilisateur définies, en prenant en compte les informations de localisation d'au moins un des dispositifs d'enregistrement d'image (14, 16).

13. Utilisation selon l'une des revendications 10 à 12, dans laquelle le dispositif de positionnement de données d'utilisateur est conçu pour associer automatiquement à au moins une partie des données d'utilisateur des positions dans l'espace bidimensionnel des données d'image.

14. Utilisation selon l'une des revendications précédentes, dans laquelle les au moins deux dispositifs d'enregistrement d'image (14, 16) sont conçus pour générer simultanément les données d'image, et/ou chacun des dispositifs d'enregistrement d'image (14, 16) génère simultanément les données d'image des deux yeux de l'utilisateur (30), et/ou les dispositifs d'enregistrement d'image (14, 16) sont conçus pour générer les données d'image de l'utilisateur (30) pour une pluralité de directions de visée différentes de l'utilisateur.

15. Utilisation selon la revendication 14, dans laquelle le dispositif de traitement de données est conçu pour déterminer un comportement visuel de l'utilisateur (30) à partir de la pluralité des données d'image.

**FIG 1**

# FIG 2

# FIG 3

FIG 4

FIG 5

FIG 6

EP 2 282 232 B1

FIG 7

FIG 8

# FIG 9

Kamera 1                     Kamera 2

Ergebnis Individualparameterberechnung:

| | | | |
|---|---|---|---|
| Pupilendistanz (PD): | 61,5mm | PD links: 30.5mm | PD rechts 31.0mm |
| Hornhaut.Scheitel-Abstand: | 11.9mm | HSA links: 10.9mm | HSA rechts:12.9mm |
| Vorneigung (VN): | 12.9° | VN links: 12.4° | VN rechts 13.4° |
| Fassungsschiebenwinkel (FSW): | 38.3° | | |

RODENSTOCK

EP 2 282 232 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004189935 A1
- US 6692127 B2

**In der Beschreibung aufgeführte Nicht-Patentliteratur**

- **DR. ROLAND ENDERS.** Die Optik des Auges und der Sehhilfen. Optische Fachveröffentlichung GmbH, 1995
- **HEINZ DIEPES ; RALF BLENDOWKSI.** Optik und Technik der Brille. Verlag Optische Fachveröffentlichungen GmbH, 2002
- **RAINER SEßNER.** *Phasenmessende Deflektometrie (PDM) - ein hochgenaues Verfahren zur Vermessung von Oberflächen,* Marz 2000